(19) **Europäisches Patentamt / European Patent Office / Office européen des brevets**

(11) **EP 4 460 130 A1**

(12) **EUROPEAN PATENT APPLICATION**
published in accordance with Art. 153(4) EPC

(43) Date of publication:
**06.11.2024 Bulletin 2024/45**

(21) Application number: **22915207.9**

(22) Date of filing: **30.12.2022**

(51) International Patent Classification (IPC):
**H04W 72/04** (2023.01)

(52) Cooperative Patent Classification (CPC):
**H04L 1/1812; H04L 5/00; H04W 52/14;
H04W 72/04; H04W 72/044; H04W 72/12**

(86) International application number:
**PCT/CN2022/144041**

(87) International publication number:
**WO 2023/125959 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.12.2021 CN 202111673190**

(71) Applicant: **VIVO MOBILE COMMUNICATION CO.,
LTD.**
**Dongguan, Guangdong 523863 (CN)**

(72) Inventor: **ZENG, Chaojun**
**Dongguan, Guangdong 523863 (CN)**

(74) Representative: **Murgitroyd & Company**
**165-169 Scotland Street**
**Glasgow G5 8PL (GB)**

(54) **POWER CONTROL PARAMETER DETERMINATION METHOD AND APPARATUS, AND TERMINAL**

(57) The present application discloses a power control parameter determining method and apparatus and a terminal, which belong to the field of communication technologies. The power control parameter determining method in the embodiments of the present application includes: in a case that a serving cell of a terminal is configured with multi-physical downlink shared channel PDSCH scheduling, determining, by the terminal, a first power control parameter according to target information related to the multi-PDSCH scheduling, where the first power control parameter includes a number of valid bits in a hybrid automatic repeat request acknowledgement HARQ-ACK; determining, by the terminal according to the first power control parameter, a transmit power of a physical uplink control channel PUCCH that carries the HARQ-ACK; and transmitting, by the terminal, the PUCCH to a network side device according to the transmit power.

In a case that a serving cell of a terminal is configured with multi-PDSCH scheduling, the terminal determines a first power control parameter according to target information related to the multi-PDSCH scheduling, where the first power control parameter includes a number of valid bits in a HARQ-ACK — 201

The terminal determines, according to the first power control parameter, a transmit power of a PUCCH that carries the HARQ-ACK — 202

The terminal transmit the PUCCH to a network side device according to the transmit power — 203

FIG. 2

EP 4 460 130 A1

**Description**

**CROSS-REFERENCE TO RELATED APPLICATION**

The present application claims priority to Chinese Patent Application No. 202111673190.X filed on December 31, 2021 in China, which is incorporated herein by reference in its entirety.

**TECHNICAL FIELD**

The present application belongs to the field of communication technologies, and specifically relates to a power control parameter determining method and apparatus and a terminal.

**BACKGROUND**

In some communication systems, transmission of multi-physical downlink shared channel (Multi-Physical Downlink Shared Channel, Multi-PDSCH) scheduling is introduced. Multi-PDSCH scheduling means that a single piece of downlink control information (Downlink Control Information, DCI) can schedule transmission of multiple physical downlink shared channels (PDSCH) on a same carrier at a time.

In related technologies, for calculation of $n_{HARQ-ACK}$ corresponding to a type-1 codebook (Type-1 codebook), processing for introducing multi-PDSCH scheduling and configuring time domain bundling (Time domain bundling) application is not considered. For calculation of $n_{HARQ-ACK}$ corresponding to a type-2 codebook (Type-2 codebook), impact of a hybrid automatic repeat request acknowledgement (Hybrid Automatic Repeat reQuest ACKnowledgement, HARQ-ACK) corresponding to multi-PDSCH scheduling is not considered. As a result, a calculated $n_{HARQ-ACK}$ value does not match a number of valid HARQ-ACK bits contained in a HARQ-ACK codebook. As a result, a transmit power that is determined according to $n_{HARQ-ACK}$ and that is of a physical uplink control channel (Physical Uplink Control Channel, PUCCH) that carries a HARQ-ACK does not match a transmit power actually required by a terminal, which reduces the transmission performance of the PUCCH that carries the HARQ-ACK.

**SUMMARY**

Embodiments of the present application provide a power control parameter determining method and apparatus and a terminal, which can solve the problem in related technologies that a transmit power of a PUCCH does not match an actual requirement, which reduces the transmission performance of a PUCCH that carries a HARQ-ACK.

According to a first aspect, a power control parameter determining method is provided, including:

in a case that a serving cell of a terminal is configured with multi-physical downlink shared channel PDSCH scheduling, determining, by the terminal, a first power control parameter according to target information related to the multi-PDSCH scheduling, where the first power control parameter includes a number of valid bits in a hybrid automatic repeat request acknowledgement HARQ-ACK;

determining, by the terminal according to the first power control parameter, a transmit power of a physical uplink control channel PUCCH that carries the HARQ-ACK; and
transmitting, by the terminal, the PUCCH to a network side device according to the transmit power.

According to a second aspect, a power control parameter determining apparatus is provided, applicable to a terminal, including:

a first determining module, configured to: in a case that a serving cell of a terminal is configured with multi-physical downlink shared channel PDSCH scheduling, determine a first power control parameter according to target information related to the multi-PDSCH scheduling, where the first power control parameter includes a number of valid bits in a hybrid automatic repeat request acknowledgement HARQ-ACK;
a second determining module, configured to determine, according to the first power control parameter, a transmit power of a physical uplink control channel PUCCH that carries the HARQ-ACK; and
a transmitting module, configured to transmit the PUCCH to a network side device according to the transmit power.

According to a third aspect, a terminal is provided. The terminal includes a processor and a memory, the memory stores a program or an instruction executable on the processor, and when the program or instruction is executed by the processor, steps of the method according to the first aspect are implemented.

According to a fourth aspect, a terminal is provided, including a processor and a communication interface. The processor is configured to: in a case that a serving cell of a terminal is configured with multi-physical downlink shared channel PDSCH scheduling, determine a first power control parameter according to target information related to the multi-PDSCH scheduling, where the first power control parameter includes a number of valid bits in a hybrid automatic repeat request acknowledgement HARQ-ACK; and determine, according to the first power control parameter, a transmit power of a physical uplink control channel PUCCH that carries the HARQ-ACK. The communication interface is configured to transmit the PUCCH to a network side device according to the transmit power.

According to a fifth aspect, a readable storage medium is provided. The readable storage medium stores a program or an instruction, and the program or instruction is executed by a processor to implement the steps of the method according to the first aspect.

According to a sixth aspect, a chip is provided, including a processor and a communication interface. The communication interface is coupled to the processor, and the processor is configured to run a program or an instruction to implement the method according to the first aspect.

According to a seventh aspect, a computer program/program product is provided, the computer program/program product is stored in a storage medium, and the computer program/program product is executed by at least one processor to implement the steps of the power control parameter determining method according to the first aspect.

In the embodiments of the present application, in a case that a serving cell of a terminal is configured with multi-physical downlink shared channel PDSCH scheduling, the terminal determines a first power control parameter according to target information related to the multi-PDSCH scheduling, where the first power control parameter includes a number of valid bits in a hybrid automatic repeat request acknowledgement HARQ-ACK. The terminal determines, according to the first power control parameter, a transmit power of a physical uplink control channel PUCCH that carries the HARQ-ACK. The terminal transmits the PUCCH to a network side device according to the transmit power. In this way, in the case that the serving cell of the terminal is configured with the multi-PDSCH scheduling, the first power control parameter can be determined according to the target information related to the multi-PDSCH scheduling, so that the first power control parameter matches the number of valid HARQ-ACK bits contained in the HARQ-ACK code, so that the transmit power that is determined according to the first power control parameter and that is of the PUCCH that carries the HARQ-ACK matches the transmit power actually required by the terminal, thereby ensuring the transmission performance of the PUCCH that carries the HARQ-ACK.

**BRIEF DESCRIPTION OF THE DRAWINGS**

[0015]

　　FIG. 1 is a block diagram of a wireless communication system to which an embodiment of the present application is applicable;

FIG. 2 is a flowchart of a power control parameter determining method according to an embodiment of the present application;

FIG. 3 is a schematic structural diagram of a power control parameter determining apparatus according to an embodiment of the present application;

FIG. 4 is a schematic structural diagram of a communication device according to an embodiment of The present application; and

FIG. 5 is a schematic structural diagram of a terminal according to an embodiment of the present application.

**DETAILED DESCRIPTION**

The following clearly describes the technical solutions in the embodiments of The present application with reference to the accompanying drawings in the embodiments of the present application the described embodiments are some but not all of the embodiments of the present application. All other embodiments obtained by persons of ordinary skill in the art based on the embodiments of the disclosure shall fall within the scope of protection of the disclosure.

In the specification and claims of the present application, the terms such as "first" and "second" are used for distinguishing similar objects, and are not necessarily used to describe a particular order or sequence. It is to be understood that the terms so used are interchangeable under appropriate circumstances such that the embodiments of the application can be implemented in sequences other than those illustrated or described herein, and "first" and "second" generally distinguish objects of a same type, and the number of objects is not limited. For example, there may be one or more first objects. In addition, in the specification and claims, "and/or" means at least one of connected objects, and the character "/" generally means that associated objects are in an "or" relationship.

It should be noted that the technology described in the embodiments of the present application is not limited to a long term evolution (Long Term Evolution, LTE)/LTE-advanced (LTE-Advanced, LTE-A) system, and may also be used in other wireless communications systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and another system. The terms "system" and "network" in the embodiments of the present application are often used interchangeably, and the described technology can be used not only for the systems and radio technologies mentioned above, but also for other systems and radio technologies. A new radio (New Radio, NR) system is described in the following description for illustrative purposes, and the NR terminology is used in most of the following description, although these technologies can also be applied to applications other than the NR system application, such as the 6th generation (6th Generation, 6G) communication system.

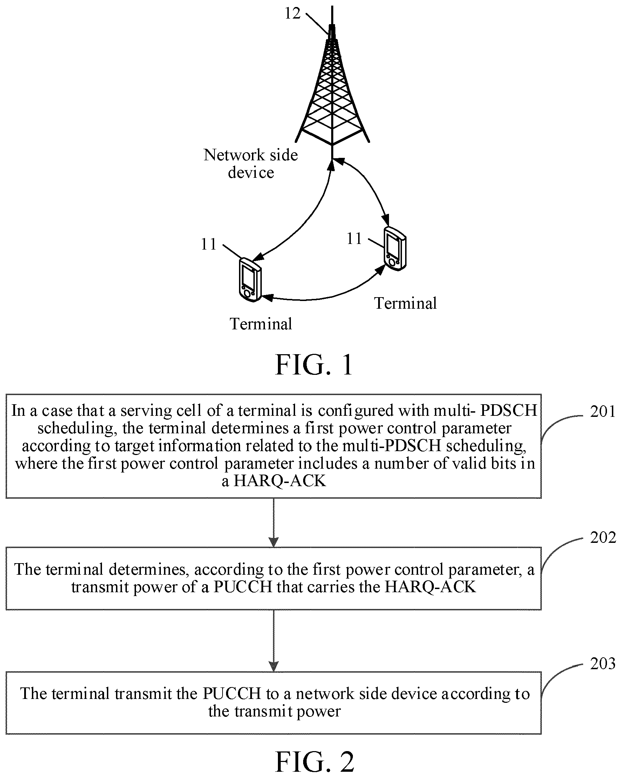

FIG. 1 is a block diagram of a wireless communication system to which an embodiment of the present application is applicable. The wireless communication system includes a terminal 11 and a network side device 12. The terminal 11 may be a mobile phone, a tablet personal computer (Tablet Personal Computer), a laptop computer (Laptop Computer) or a notebook computer, a personal digital Assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device, WD), vehicle user equipment (Vehicle User Equipment, VUE), pedestrian terminal (Pedestrian User Equipment, PUE), a smart home appliance (home equipment with a wireless communication function, such as a refrigerator, a TV, a washing machine or a furniture), and terminal side equipment such as a game console, a personal computer (Personal Computer, PC), an ATM or a self-service machine. The wearable device includes: smart watches, smart bracelets, smart headphones, smart glasses, smart jewelry (smart bracelets, smart rings, smart necklaces, smart anklets, or the like), smart wristbands, smart clothing, or the like. It should be noted that the specific type of the terminal 11 is not limited in the embodiments of the present application. The network side device 12 may include an access network device or a core network device, where the access network device may also be called a radio access network device, a radio access network (Radio Access Network, RAN), a radio access network function or a radio access network unit. The network side device may include a base station, a wireless local area network (Wireless Local Area Networks, WLAN) access point, a wireless fidelity (Wireless Fidelity, WiFi) node, or the like. The base station may be referred to as a node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmission reception point (Transmission Reception Point, TRP), or other appropriate terms in the art. As long as a same technical effect is achieved, the base station is not limited to a specified technical term. It should be noted that, in embodiments of the present application, only a base station in the NR system is used as an example, but a specific type of the base station is not limited.

In related technologies, when UE initiates PUCCH transmission on an activated uplink bandwidth part $b$ (Bandwidth Part, BWP) of a carrier f of a primary cell (primary cell) $c$, the UE determines a transmit power $P_{\text{PUCCH},b,f,c}$ ($i$, $q_u$, $q_d$, 1) of the PUCCH transmission based on the following formula (1):

$$P_{\text{PUCCH},b,f,c}(i,q_u,q_d,l) =$$
$$\min\left\{\begin{array}{l} P_{\text{CMAX},f,c}(i), \\ P_{\text{O\_PUCCH},b,f,c}(q_u)+10\log_{10}(2^{\mu}\cdot M_{\text{RB},b,f,c}^{\text{PUCCH}}(i))+PL_{b,f,c}(q_d)+\Delta_{\text{F\_PUCCH}}(F)+\Delta_{\text{TF},b,f,c}(i)+g_{b,f,c}(i,l) \end{array}\right\}$$
[dBm]

$i$ indicates a PUCCH transmission occasion index.

$q_u$ indicates a user-equipment (User Equipment, UE)-level $P_O$ index and is used to determine $P_{\text{O\_UE\_PUCCH}}(q_u)$.

$q_d$ indicates an index of a reference signal used as a path loss reference and is used to determine $PL_{b,f,c}(q_d)$.

1 indicates a PUCCH closed-loop power control status index.

$\mu$ indicates a subcarrier spacing index corresponding to PUCCH transmission.

$P_{\text{O\_PUCCH},b,f,c}(q_u)$ indicates a total $P_O$ value obtained by adding $P_{\text{O\_NOMINAL\_PUCCH}}$ and $P_{\text{O\_UE\_PUCCH}}(q_u)$, where $P_{\text{O\_NOMINAL\_PUCCH}}$ is common $P_O$, and $P_{\text{O\_UE\_PUCCH}}(q_u)$ is UE-level $P_O$. $M_{\text{RB},b,f,c}^{\text{PUCCH}}(i)$ indicates a number of resource blocks occupied by PUCCH transmission.

$PL_{b,f,c}$) indicates an estimated downlink path loss in dB.

$\Delta_{\text{F\_PUCCH}}$ (F) indicates a power adjustment amount based on a PUCCH format.

$\Delta_{\text{TF},b,f,c}$ (i) indicates a power adjustment amount based on a PUCCH transmission attribute.

$g_{b,f,c}$($i$, 1) indicates a PUCCH closed-loop power control adjustment amount.

Calculation of $\Delta_{TFb,f,c}(i)$ is different based on a PUCCH format (format) and a number of bits of carried uplink control information (Uplink Control Information, UCI). For a PUCCH transmission using PUCCH format 2/3/4 and for a number of UCI bits smaller than or equal to 11 (For a PUCCH transmission using PUCCH format 2 or PUCCH format 3 or PUCCH format 4 and for a number of UCI bits smaller than or equal to 11), $\Delta_{TF,b,f,c}(i)$ is calculated based on the following formula (2):

$$\Delta_{TF,b,f,c}(i) = 10 \log_{10}\left(K_1 \cdot \left(n_{HARQ\text{-}ACK}(i) + O_{SR}(i) + O_{CSI}(i)\right) \middle/ N_{RE}(i)\right)$$

where $K_1 = 6$.

$n_{HARQ\text{-}ACK}(i)$ is a number of valid bits of HARQ-ACK information determined by the UE. For calculation processes of different HARQ-ACK codebook types, refer to the subsequent description. When the HARQ-ACK codebook type is not configured for the UE, if the PUCCH transmission carries a HARQ-ACK of 1 bit, $n_{HARQ\text{-}ACK}(i) = 1$; otherwise, $n_{HARQ\text{-}ACK}(i) = 0$

$O_{SR}(i)$ is a number of bits of scheduling request (Scheduling Request, SR) information determined by the UE.

$O_{CSI}(i)$ is a number of bits of channel state information (Channel State Information, CSI) determined by the UE.

$N_{RE}(i)$ is a number of resource elements (resource element) occupied by data information in PUCCH transmission, and $N_{RE}(i) = M_{RB,b,f,c}^{PUCCH}(i) \cdot N_{sc,ctrl}^{RB}(i) \cdot N_{symb-UCI,b,f,c}^{PUCCH}(i)$. $N_{sc,ctrl}^{RB}(i)$ is a number of subcarriers corresponding to each resource block, and excludes subcarriers occupied by dedicated demodulation reference signal (Dedicated demodulation reference signals, DM-RS) transmission, and $N_{symb-UCI,b,f,c}^{PUCCH}(i)$ is a number of symbols occupied by PUCCH transmission and excludes symbols occupied by DM-RS transmission.

It should be noted that when user equipment (User Equipment, UE) constructs a HARQ-ACK bit sequence that needs to be reported at a feedback moment, based on a predefined rule and a status of PDSCH transmission on a single carrier/multiple carriers that needs to report a HARQ-ACK at this feedback moment and/or a DCI indication that indicates that PDSCH transmission is not scheduled but a corresponding HARQ-ACK needs to be fed back, the correspondence between each PDSCH transmission and/or DCI indication and a bit in the constructed HARQ-ACK bit sequence is determined. This operation is called construction of a HARQ-ACK codebook (Codebook) or a HARQ-ACK codebook scheme. NR Rel-15 uses two HARQ-ACK codebook schemes: semi-static codebook (Type-1 Codebook) and dynamic codebook (Type-2 Codebook).

A semi-static codebook is constructed from the perspective of possible PDSCH reception occasions (Occasions), and is based on a feedback timing (Timing) configuration table (that is, a K1 set configured by the higher layer and including one or at least two candidate K1, where K1 is used to indicate a time offset between PDSCH reception and its corresponding HARQ-ACK feedback, or a time offset between a piece of DCI which does not schedule any PDSCH transmission but a corresponding HARQ-ACK needs to be fed back and its corresponding HARQ-ACK feedback, and has a granularity of a PUCCH slot (Slot)) and a HARQ-ACK feedback time (that is, a PUCCH slot where semi-static codebook transmission is located). A corresponding HARQ-ACK bit is reserved for each possible PDSCH reception occasion (which is determined based on both a time domain resource allocation (Time Domain Resource Allocation, TDRA) table (Table) configured by the higher layer and the K1 set) (which can be understood as converting an occasion formed by each possible occasion into a HARQ-ACK bit sequence). If the UE does not actually receive, on a PDSCH reception occasion, a corresponding PDSCH, or the UE does not actually detect a corresponding DCI indication that indicates that PDSCH transmission is not scheduled but a corresponding HARQ-ACK needs to be fed back (for example, SPS PDSCH release), a corresponding HARQ-ACK bit is set to negative acknowledgment (Negative Acknowledgement, NACK). Otherwise, when the UE receives the corresponding PDSCH, the corresponding HARQ-ACK bit is set based on a decoding result of the PDSCH, and when the UE detects the corresponding DCI indication, the corresponding HARQ-ACK bit is set to ACK.

The calculation of $n_{HARQ\text{-}ACK}(i)$ is different based on different HARQ-ACK codebook types and is described below.

<For Type-1 codebook>

$n_{HARQ\text{-}ACK}(i)$ can be calculated based on the following formula (3):

$$n_{\text{HARQ-ACK}} = \sum_{c=0}^{N_{\text{cells}}^{\text{DL}}-1} \sum_{m=0}^{M_c-1} N_{m,c}^{\text{received}} + \sum_{c=0}^{N_{\text{cells}}^{\text{DL}}-1} \sum_{m=0}^{M_c-1} N_{m,c}^{\text{received,CBG}}$$

When PDSCH-CodeBlockGroupTransmission is configured (in this case, harq-ACK-SpatialBundlingPUCCH definitely cannot be configured), $N_{m,c}^{\text{received,CBG}}$ is a number of code block groups (Code block group, CBG) received by the UE in the PDSCH reception occasion m of a serving cell c, and the PDSCH reception that carries these CBGs is scheduled by DCI (that is, corresponding to non-fallback DCI) supporting CBG-based PDSCH reception. Otherwise, $N_{m,c}^{\text{received,CBG}} = 0$.

The specific meaning and value of $N_{m,c}^{\text{received}}$ can be determined based on the following cases (Case 1 and Case 2):

Case 1: When the UE receives a PDSCH in the PDSCH reception occasion (reception occasion) m, there are specifically the following case 1-1 to case 1-3. The receiving occasion can also be called a receiving opportunity. For ease of description, they are collectively called a receiving occasion in the following embodiments.

Case 1-1: When neither harq-ACK-SpatialBundlingPUCCH nor PDSCH-CodeBlockGroupTransmission is configured, $N_{m,c}^{\text{received}}$ is a number of transport blocks received by the UE in a PDSCH reception occasion m of a serving cell c.

Case 1-2: When PDSCH-CodeBlockGroupTransmission is configured (in this case, harq-ACK-SpatialBundlingPUCCH definitely cannot be configured), $N_{m,c}^{\text{received}}$ is a number of transport blocks received by the UE in the PDSCH reception occasion m of a serving cell c, and the PDSCH reception that carries these transport blocks is scheduled by DCI (that is, corresponding to fallback DCI) not supporting CBG-based PDSCH reception.

Case 1-3: When harq-ACK-SpatialBundlingPUCCH is configured (in this case, PDSCH-CodeBlockGroupTransmission definitely cannot be configured), $N_{m,c}^{\text{received}}$ is a number of PDSCH receptions received by the UE in a PDSCH reception occasion m of a serving cell c.

Case 2: When the UE receives the SPS PDSCH release for the PDSCH reception occasion m of the serving cell c, and feeds back a corresponding HARQ-ACK in the type-1 codebook for this SPS PDSCH release, $N_{m,c}^{\text{received}} = 1$.

<For Type-2 codebook>

This type-2 codebook involves a total of three formulas (formula (4), formula (5) and formula (6), and formula (6) is a sum of formula (4) and formula (5)). When the type-2 codebook only involves a transport block-based (Transport Block based, TB-based) HARQ-ACK (each serving cell (Serving cell) in the PUCCH cell group (cell group) is not configured with code block group (Code block group, CBG) transmission, that is, is not configured with a higher-layer parameter of PDSCH-ServingCellConfig->codeBlockGroupTransmission), only a single sub-codebook (Sub-codebook) is involved, and $n_{\text{HARQ-ACK}}$ is calculated based on formula (4). When the type-2 codebook involves both a TB-based HARQ-ACK and a CBG-based HARQ-ACK (at least one serving cell in the PUCCH cell group is configured with CBG transmission, that is, is configured with a higher-layer parameter of PDSCH-ServingCellConfig->codeBlockGroupTransmission), two sub-codebooks are involved, and $n_{\text{HARQ-ACK}}$ is calculated based on formula (6).

Formula (4) for calculating $n_{\text{HARQ-ACK}}$ for the TB-based HARQ-ACK is:

$$n_{\text{HARQ-ACK}} = n_{\text{HARQ-ACK,TB}} =$$
$$\left( \left( V_{\text{DAI},m_{\text{last}}}^{\text{DL}} - \sum_{c=0}^{N_{\text{cells}}^{\text{DL}}-1} U_{\text{DAI},c} \right) mod(T_D) \right) N_{\text{HARQ-ACK}}^{\max} + \sum_{c=0}^{N_{\text{cells}}^{\text{DL}}-1} \left( \sum_{m=0}^{M-1} N_{m,c}^{\text{received}} + N_{\text{SPS},c} \right)$$

$T_D = 2^{N_{\text{C-DAI}}^{\text{DL}}}$, and $N_{\text{C-DAI}}^{\text{DL}}$ indicates a number of bits occupied by a counter (counter) downlink assignment index (Downlink Assignment Index, DAI). $N_{\text{cells}}^{\text{DL}}$ indicates a number of serving cells configured with PDSCH transmission in the PUCCH cell group.

The meanings and values of $V_{DAI,m_{last}}^{DL}$ are different based on the following cases:

1) When the UE detects no DCI in M PDCCH monitoring occasions (this DCI may schedule PDSCH reception or may not schedule PDSCH reception but needs feedback of corresponding HARQ-ACK information, and does not target a specific serving cell), $V_{DAI,m_{last}}^{DL} = \bar{0}$.

2) When $N_{cells}^{DL} = 1$, $V_{DAI,m_{last}}^{DL}$ is a value of a counter (counter) DAI carried by the last DCI detected by the UE in M PDCCH detection occasions (monitoring occasion). This last DCI may schedule PDSCH reception or may not schedule PDSCH reception but needs feedback of the corresponding HARQ-ACK information.

3) When $N_{cells}^{DL} > 1$, $V_{DAI,m_{last}}^{DL}$ can be differently determined based on the following cases:

3-1) When the UE detects the last PDCCH monitoring occasion of PDCCH monitoring occasions of at least one piece of DCI in M PDCCH monitoring occasions (this DCI may schedule PDSCH reception or may not schedule PDSCH reception but needs feedback of corresponding HARQ-ACK information, and does not target a specific serving cell), if the UE detects no DCI carrying a total (total) DAI in this PDCCH monitoring occasion, $V_{DAI,m_{last}}^{DL}$ is a value of a counter DAI carried by the last DCI detected by UE in this PDCCH monitoring occasion.

3-2) When the UE detects the last PDCCH monitoring occasion of PDCCH monitoring occasions of at least one piece of DCI in M PDCCH monitoring occasions (this DCI may schedule PDSCH reception or may not schedule PDSCH reception but needs feedback of corresponding HARQ-ACK information, and does not target a specific serving cell), if the UE detects, in this PDCCH monitoring occasion, at least one piece of DCI carrying a total DAI, $V_{DAI,m_{last}}^{DL}$ is a value of the total DAI carried by the at least one piece of DCI carrying the total DAI and detected by the UE in this PDCCH monitoring occasion (when UE detects multiple pieces of DCI carrying total DAIs in this PDCCH monitoring occasion, values of the total DAIs carried by these pieces of DCI need to be equal).

The meanings and values of $U_{DAI,c}$ can be differently determined based on the following cases:

1) $U_{DAI,c}$ is a total number of pieces of DCI detected by the UE in M PDCCH monitoring occasions for the serving cell c, and these pieces of DCI may schedule PDSCH reception or may not schedule PDSCH reception but needs feedback of corresponding HARQ-ACK information.

2) When the UE detects no DCI in M PDCCH monitoring occasions for the serving cell c (this DCI may schedule PDSCH reception or may not schedule PDSCH reception but needs feedback of corresponding HARQ-ACK information, $U_{DAI,c} = 0$.

The meanings and values of $N_{TB,max}^{DL}$ can be differently determined based on the following cases:

When maxNrofCodeWordsScheduledByDCI is configured as 2 for any serving cell and harq-ACK-SpatialBundlingPUCCH is not configured, $N_{TB,max}^{DL} = 2$. Otherwise (otherwise), $N_{TB,max}^{DL} = 1$.

The specific meaning and value of $N_{m,c}^{received}$ can be differently determined based on the following cases (Case 1 and Case 2):

Case 1: When the UE receives the DCI for scheduling a PDSCH, there are specifically the following Case 1-1 to Case 1-2:

Case 1-1: When harq-ACK-SpatialBundlingPUCCH is not configured, $N_{m,c}^{received}$ is a number of transport blocks carried by a PDSCH scheduled by DCI detected by the UE in the PDCCH monitoring occasion (monitoring occasion) m for the serving cell c.

Case 1-2: When harq-ACK-SpatialBundlingPUCCH is configured, $N_{m,c}^{received}$ is a number of PDSCHs scheduled by DCI detected by the UE in the PDCCH monitoring occasion m for the serving cell c.

Case 2: $N_{m,c}^{received}$ is a number of pieces of DCI that are detected by the UE in the PDCCH monitoring occasion m for the serving cell c and that do not schedule PDSCH reception but need feedback of corresponding HARQ-ACKs.

$N_{SPS,c}$ is a number of semi-persistent scheduling (Semi-Persistent Scheduling, SPS) PDSCH receptions for which the UE needs to feed back corresponding HARQ-ACK information in a PUCCH for the serving cell c, and the UE also feeds back, in this PUCCH, HARQ-ACK information corresponding to PDSCH reception scheduled in M PDCCH monitoring occasions.

Formula (5) for calculating $n_{HARQ-ACK}$ for the CBG-based HARQ-ACK is:

$$n_{\text{HARQ-ACK,CBG}} = \left(\left(V_{\text{DAI},m_{\text{last}}}^{\text{DL}} - \sum_{c=0}^{N_{\text{cells}}^{\text{DL,CBG}}-1} U_{\text{DAI},c}^{\text{CBG}}\right) mod(T_D)\right) N_{\text{HARQ-ACK,max}}^{\text{CBG/TB,max}} + \sum_{c=0}^{N_{\text{cells}}^{\text{DL}}-1} \sum_{m=0}^{M-1} N_{m,c}^{\text{received,CBG}}$$

$N_{\text{cells}}^{\text{DL}}$ indicates a number of serving cells configured with PDSCH scheduling in the PUCCH cell group.

The meanings and values of $V_{\text{DAI},m_{\text{last}}}^{\text{DL}}$ are different based on the following cases:

1) When $N_{\text{cells}}^{\text{DL}} = 1$, $V_{\text{DAI},m_{\text{last}}}^{\text{DL}}$ is a value of a counter DAI carried in the last piece of DCI scheduling CBG-based PDSCH reception for any serving cell that the UE detects within M PDCCH monitoring occasions.

2) When $N_{\text{cells}}^{\text{DL}} > 1$, $V_{\text{DAI},m_{\text{last}}}^{\text{DL}}$ is a value of a total DAI carried in the last piece of DCI scheduling CBG-based PDSCH reception for any serving cell that the UE detects within M PDCCH monitoring occasions.

3) When the UE detects, in M PDCCH monitoring occasions for any serving cell, no DCI that schedules CBG-based PDSCH reception, $V_{\text{DAI},m_{\text{last}}}^{\text{DL}} = 0$.

The meanings and values of $U_{\text{DAI},c}^{\text{CBG}}$ can be differently determined based on the following cases:

1) $U_{\text{DAI},c}^{\text{CBG}}$ is a total number of pieces of DCI detected by the UE in M PDCCH monitoring occasions for the serving cell c and scheduling CBG-based PDSCH reception.

2) When the UE detects, in M PDCCH monitoring occasions for the serving cell c, no DCI that schedules CBG-based PDSCH reception, $U_{\text{DAI},c}^{\text{CBG}} = 0$.

$N_{m,c}^{\text{received,CBG}}$ is a number of CBGs carried by the PDSCH scheduled by the DCI detected by the UE on the PDCCH monitoring occasion m for the serving cell c and supporting CBG-based PDSCH reception.

In formula (6), $n_{HARQ-ACK}$ calculated for the TB-based HARQ-ACK and $n_{HARQ-ACK}$ calculated for the CBG-based HARQ-ACK are added, that is, formula (6) is:

$$n_{\text{HARQ-ACK}} = n_{\text{HARQ-ACK,TB}} + n_{\text{HARQ-ACK,CBG}}$$

In related technologies, an enhanced type-2 codebook and a type-3 codebook are also introduced.

<For enhanced type-2 codebook>

The UE determines a number $n_{HARQ-ACK,g}$ of valid bits of the corresponding HARQ-ACK information for the PDSCH group g, and determines a number $n_{HARQ-ACK,(g+1)mod2}$ of valid bits of the corresponding HARQ-ACK information for (g + 1)mod2 of the PDSCH group. It should be noted that $N_{SPS,c}$ is only included in $n_{HARQ-ACK,g}$.

When q = 1 and $V_{\text{DAI}}^{(g+1)\text{mod}2} \neq \emptyset$, the UE sets $V_{\text{DAI},m_{\text{last}}}^{\text{DL}} = V_{\text{DAI}}^{(g+1)\text{mod}2}$ to determine $n_{HARQ-ACK,(g+1)mod2}$ according to $V_{\text{DAI}}^{(g+1)\text{mod}2}$.

Specifically, $n_{HARQ-ACK}$ is determined based on the following process:

When q = 0, $n_{HARQ-ACK} = n_{HARQ-ACK,g}$.

Otherwise, $n_{HARQ-ACK} = n_{HARQ-ACK,g} + n_{HARQ-ACK, (g+1)mod2}$.

The relevant parameters are described as follows:

g is indicated in the last non-fallback (non-fallback) DCI corresponding to the enhanced type-2 codebook, and g is specifically indicated by the PDSCH group index (group index) indication field of the DCI. $V_{\text{DAI}}^{(g+1)\text{mod}2}$ is indicated in the last non-fallback DCI corresponding to the type-2 codebook, and $V_{DAI}^{(g+1)mod2}$ is specifically indicated by the total DAI indication field corresponding to the PDSCH group (g + 1)mod2 (when this indication field is configured, and when this indication field is not configured, $V_{DAI}^{(g+1)mod2} = \emptyset$ ).

<For Type-3 codebook>

$n_{HARQ,ACK}(i) = O_{ACK}(i)$, where $O_{ACK}(i)$ is a number of valid HARQ-ACK bits included in the type-3 codebook.

As can be seen from the calculation process of $n_{HARQ-ACK}$ in the type-1 codebook, type-2 codebook, enhanced type-3 codebook and type-3 codebook and the definition of each parameter in the calculation process, in related technologies, when calculating $n_{HARQ-ACK}$, the multi-physical uplink shared channel (Multi-Physical Uplink Shared Channel, Multi-PUSCH) scheduling is not considered. As a result, when multi-PUSCH scheduling is introduced, $n_{HARQ-ACK}$ values calculated based on calculation rules in type-1 codebook, type-2 codebook, enhanced type-3 codebook, and type-3 codebook do not match the actual case of multi-PUSCH scheduling.

For example: during the research of the features of 52.6 to 71 GHz in Rel-17, it is confirmed that new subcarrier spacings (SCS) including 480 kHz and 960 kHz need to be introduced for new NR bands deployed. For these newly introduced SCSs, PDCCH monitoring needs to be adjusted or enhanced accordingly, for example: the UE is prevented from monitoring the PDCCH in each slot (or a very short period of time), to reduce implementation complexity of the UE. Accordingly, in order to make full use of carrier time domain resources, multi-PDSCH scheduling and multi-PUSCH scheduling need to be studied/introduced.

Multi-PDSCH scheduling means that a single piece of DCI can schedule multiple PDSCH transmissions on a same carrier at a time. According to the NR protocol, these PDSCHs do not overlap with each other in the time domain.

When a serving cell configured for the UE supports multi-PDSCH scheduling, at least one row in the TDRA table configured for the serving cell is configured with more than one start indication (Entry)/start and length indicator value (Start and Length Indicator Value, SLIV). The DCI for downlink scheduling schedules, for the UE by indicating a row in the TDRA table, the PDSCH corresponding to each entry/SLIV in the indicated row. An entry/SLIV provides time domain resource allocation information corresponding to the PDSCH.

During the research of the features of 52.6 to 71 GHz in Rel-17, the construction of the type-1 codebook and the type-2 codebook is mainly discussed for HARQ-ACK feedback of multi-PDSCH scheduling.

<For Type-1 codebook>

When application of time domain bundling is not configured for a serving cell, a downlink (DownLink, DL) slot set that may appear for PDSCH scheduling of the serving cell when the type-1 codebook is fed back in a specified PUCCH slot, and an SLIV set corresponding to a PDSCH that may exist in each DL slot in a DL slot set are determined based on a configured K1 set and each row in a TDRA table configured for the serving cell. Based on the DL slot set and the SLIV set corresponding to each DL slot, an occasion set corresponding to this serving cell is obtained by following the Rel-15/16 pseudocode process, and the occasion set is converted into a corresponding HARQ-ACK bit sequence of the serving cell in the Type-1 codebook.

When application of time domain bundling is configured for a serving cell, based on the last SLIV of each row in a TDRA table configured for this serving cell and a configured K1 set, an occasion set corresponding to this serving cell is obtained by following the Rel-15/16 pseudocode process, and the occasion set is converted into a corresponding HARQ-ACK bit sequence of the serving cell in the Type-1 codebook.

It should be noted that whether to apply time domain bundling can be configured independently for each serving cell configured in a PUCCH cell group, and corresponding HARQ-ACK bit sequences of all serving cells in the type-1 codebook are determined independently, and then are cascaded from head to tail across serving cells.

<For Type-2 codebook>

DAI counting is performed based on DCI.

When application of time domain bundling is not configured for a serving cell, for this serving cell, only DCI of a single PDSCH is scheduled, or only a single HARQ-ACK bit is generated and DCI of the PDSCH is not scheduled. A corresponding HARQ-ACK is placed in the first (first) sub-codebook, a HARQ-ACK corresponding to DCI scheduling more than one PDSCH is placed in the second (second) sub-codebook, and DAI counting is performed for the two sub-codebooks separately.

When application of time domain bundling is configured for a serving cell, if the number of configured bundling groups is 1, a HARQ-ACK corresponding to DCI scheduling more than one PDSCH for this serving cell is placed in the first sub-codebook; otherwise, is placed in the second sub-codebook. Other operations are exactly the same as those when application of time domain bundling is not configured.

It should be noted that whether to apply time domain bundling can be configured independently for each serving cell configured in a PUCCH cell group. DAIs are counted uniformly across serving cells in a PUCCH cell group.

As can be seen from the construction rules for the type-1 codebook and the type-2 codebook that support HARQ-ACK feedback of multi-PDSCH scheduling, in related technologies, the processing of introducing multi-PDSCH scheduling and configuring the application of time domain bundling (Time domain bundling) is not considered in corresponding calculation of $n_{HARQ-ACK}$ for the Type-1 codebook (Type-1 codebook). As a result, $n_{HARQ-ACK}$ calculated in this configuration is inaccurate (that is, the calculated $n_{HARQ-ACK}$ is not a number of valid HARQ-ACK bits contained in the codebook), and may even exceed the number of bits in the HARQ-ACK codebook, thereby affecting proper setting of PUCCH transmit power. For calculation of $n_{HARQ-ACK}$ corresponding to the type-2 codebook (Type-2 codebook), impact of a hybrid automatic repeat request acknowledgement (Hybrid Automatic Repeat reQuest ACKnowledgement, HARQ-ACK) corresponding to multi-PDSCH scheduling is not considered, thereby not supporting multi-PDSCH scheduling.

It should be noted that when the value of $n_{HARQ-ACK}$ does not match the actual case of multi-PUSCH scheduling, a transmit power that is calculated based on $n_{HARQ-ACK}$ and that is of the PUCCH that carries the HARQ-ACK (that is, $P_{PUCCH,b,f,c}(i,q_u,q_d,l)$ in formula (1)) is inconsistent with the transmit power actually required by the terminal. In this way, if $P_{PUCCH,b,f,c}(i,q_u,q_d,l)$ is greater than the transmit power actually required by the terminal and the PUCCH is transmitted based on this power, the terminal consumes too much power. If $P_{PUCCH,b,f,c}(i,q_u,q_d,l)$ is less than the transmit power actually required by the terminal, the transmission reliability of the PUCCH that carries the HARQ-ACK is reduced, for example: the detection performance of a network side device in PUCCH reception is reduced, including a greater probability of PUCCH missed detection, incorrect detection, or the like.

In the embodiments of the present application, the target information related to multi-PDSCH scheduling can be considered in the calculation process of $n_{HARQ-ACK}$, so that $n_{HARQ-ACK}$ determined according to the target information can accurately reflect the number of valid HARQ-ACK bits contained in the HARQ-ACK codebook, thereby improving the accuracy of $P_{PUCCH,b,f,c}(i,q_u,q_d,l)$ calculated based on $n_{HARQ-ACK}$ or the matching degree with the requirement of the PUCCH transmit power. This can improve the transmission reliability of the PUCCH that carries the HARQ-ACK while reducing the power consumption of the terminal.

A power control parameter determining method, a power control parameter determining apparatus and a terminal provided by the embodiments of the present application will be described in detail below with reference to the accompanying drawings through some embodiments and application scenarios.

Referring to FIG. 2, an embodiment of the present application provides a power control parameter determining method. The method may be performed by a terminal. The terminal may include various terminals 11 listed in the embodiments as shown in FIG. 1, or may include other unlisted terminals. These are not specifically limited herein. As shown in FIG. 2, the power control parameter determining method may include the following steps:

Step 201: In a case that a serving cell of a terminal is configured with multi-(Multi-) physical downlink shared channel PDSCH scheduling, the terminal determines a first power control parameter according to target information related to the multi-PDSCH scheduling, where the first power control parameter includes a number of valid bits in a hybrid automatic repeat request acknowledgement HARQ-ACK.

The first power control parameter may be $n_{HARQ-ACK}$ in the above formula (2), and a difference between this $n_{HARQ-ACK}$ and $n_{HARQ-ACK}$ calculated in related technologies includes: in this embodiment of the present application, $n_{HARQ-ACK}$ is determined based on the target information related to multi-PDSCH scheduling, so that the value and meaning of $n_{HARQ-ACK}$ are different from those of $n_{HARQ-ACK}$ calculated in related technologies, and $n_{HARQ-ACK}$ determined in this embodiment of the present application can accurately reflect the number of valid bits of HARQ-ACK information in multi-PDSCH scheduling.

Optionally, the target information may include at least one of the following: first configuration information for time domain bundling transmission, second configuration information for spatial bundling transmission, a codebook used by the HARQ-ACK, and a sub-codebook used by the HARQ-ACK.

Option one: It can be determined according to the first configuration information whether the terminal is configured to transmit the HARQ-ACK by using time domain bundling (Time domain bundling).

Option two: It can be determined according to the second configuration information whether the terminal is configured to transmit the HARQ-ACK by using spatial bundling (Spatial bundling).

Option three: According to the codebook used by the HARQ-ACK, a HARQ-ACK codebook type used by the HARQ-ACK can be determined, for example: a type-1 codebook, a type-2 codebook, an enhanced type-2 codebook or a type-3 codebook. In an implementation, according to the HARQ-ACK codebook type used by the HARQ-ACK, $n_{HARQ-ACK}$ can be determined based on a calculation rule corresponding to the codebook type.

Option four: The type-2 codebook can include two sub-codebooks. According to the sub-codebook used by the HARQ-ACK, $n_{HARQ-ACK}$ can be determined based on a calculation rule corresponding to the sub-codebook. In an implementation, the sub-codebook used by the HARQ-ACK may be determined according to the first configuration and/or the second configuration, for example: when no serving cell corresponding to the PUCCH cell group (cell group) corresponding to the serving cell is configured with time domain bundling, the type-2 codebook involves two sub-codebooks. If serving cells in the PUCCH cell group that are configured with multi-PDSCH scheduling are all configured with time domain bundling, and the number of configured bundling groups is 1, the type-2 codebook only involves a single sub-codebook. If at least one of the serving cells in the PUCCH cell group that are configured with multi-PDSCH scheduling is configured with time domain bundling, and the number of configured bundling groups is greater than 1, the type-2 codebook involves two sub-codebooks.

Step 202: The terminal determines, according to the first power control parameter, a transmit power of a physical uplink control channel PUCCH that carries the HARQ-ACK.

In this step, because $n_{\text{HARQ-ACK}}$ determined in step 201 can accurately reflect the number of valid bits of HARQ-ACK information in multi-PDSCH scheduling, the transmit power that is determined according to $n_{\text{HARQ-ACK}}$ and that is of the PUCCH that carries the HARQ-ACK matches the number of valid bits corresponding to the HARQ-ACK that the terminal needs to transmit.

The transmit power of the PUCCH can be $P_{\text{PUCCH},b,f,c}(i,q_u,q_d,l)$ calculated according to formula (1), which is not described again herein.

Step 203: The terminal transmits the PUCCH to a network side device according to the transmit power.

In this step, the terminal transmits the PUCCH according to the transmit power that matches the number of valid bits of the HARQ-ACK that the terminal needs to transmit. This can ensure the transmission reliability of the PUCCH while reducing as much as possible power consumption of transmitting the PUCCH by the terminal.

Corresponding to step 203, the network side device corresponding to the serving cell of the terminal can determine $n_{\text{HARQ-ACK}}$ according to a same calculation rule based on a status of the PDSCH reception and/or DCI indication transmission corresponding to the HARQ-ACK codebook, and then estimate, according to formula (1), the PUCCH transmit power used by the terminal when transmitting the PUCCH that carries the HARQ-ACK, thereby predicting the PUCCH reception performance, and adjusting a corresponding closed-loop power control adjustment amount as needed. However, in an actual network environment, there are problems such as DCI missed detection and downlink path loss estimation errors. As a result, there may be an error between $n_{\text{HARQ-ACK}}$ calculated by the network side device and $n_{\text{HARQ-ACK}}$ calculated by the terminal, and there may be an error between the PUCCH transmit power used by the terminal and the PUCCH transmit power that the network side device expects the terminal to use. However, the error only affects the PUCCH detection performance of the network side device to a certain extent, and the control over the PUCCH transmission performance by the network side device, and does not affect normal interaction between the two sides.

For HARQ-ACKs that use different HARQ-ACK codebook types, $n_{\text{HARQ-ACK}}$ can be determined based on calculation rules corresponding to the codebook types. For the convenience of description, in the embodiments of the present application, the following four embodiments are used to distinguish calculation rules corresponding to the type-1 codebook, the type-2 codebook, the enhanced type-2 codebook and the type-3 codebook.

Embodiment 1 Calculation of $n_{\text{HARQ-ACK}}$ of the type-1 codebook

As an optional implementation, in a case that the codebook used by the HARQ-ACK is a type-1 codebook, the determining, by the terminal, a first power control parameter according to target information related to the multi-PDSCH scheduling includes:

determining, by the terminal, at least one of a first variable and a second variable based on the target information; and
determining, by the terminal, the first power control parameter according to at least one of the first variable and the second variable based on a first calculation rule corresponding to the type-1 codebook.

In an implementation, the first variable can be regarded as $N_{m,c}^{\text{received}}$, the second variable can be regarded as $N_{m,c}^{received,CBG}$, and the determining the first power control parameter according to at least one of the first variable and the second variable, and based on a first calculation rule corresponding to the type-1 codebook can be calculating $n_{\text{HARQ-ACK}}$ according to the following formula:

$$n_{\text{HARQ-ACK}} = \sum_{c=0}^{N_{\text{cells}}^{\text{DL}}-1} \sum_{m=0}^{M_c-1} N_{m,c}^{\text{received}} + \sum_{c=0}^{N_{\text{cells}}^{\text{DL}}-1} \sum_{m=0}^{M_c-1} N_{m,c}^{\text{received,CBG}}$$

It should be noted that for the calculation of $n_{HARQ-ACK}$ of the type-1 codebook, when the type-1 codebook supports multi-PDSCH scheduling, it can be considered that one or at least two serving cells in the configured serving cell set corresponding to the corresponding PUCCH cell group may be configured with multi-PDSCH scheduling. In this case, there may still be a serving cell in the serving cell set that is not configured with multi-PDSCH scheduling, and CBG transmission may still be configured for this/these serving cells that is/are not configured with multi-PDSCH scheduling. Considering that multi-PDSCH scheduling and CBG transmission may coexist in the corresponding PUCCH cell group (but based on the conclusion of the current discussion, multi-PDSCH scheduling and CBG transmission cannot coexist in a same serving cell), the meanings and values of the first variable ( $N_{m,c}^{received}$ )) and the second variable ( $N_{m,c}^{received,CBG}$ )) in the above formula can be determined according to the actual case of multi-PDSCH scheduling. A serving cell configured with multi-PDSCH scheduling can be understood as a serving cell in which at least one row in a TDRA table configured for at least one DL BWP is configured with more than one time domain resource allocation record. The time domain resource allocation record may be an entry or an SLIV, or a single time-domain resource allocation record corresponds to or contains a single SLIV. For ease of description, the following embodiment uses an example in which the time domain resource allocation record is an SLIV.

Optionally, in a case that the codebook used by the HARQ-ACK is a type-1 codebook, the determining, by the terminal, a second variable according to the target information includes:
determining, by the terminal, that the second variable is equal to 0.

In an implementation, for a serving cell configured with multi-PDSCH scheduling (CBG transmission cannot be configured at the same time), the UE can directly assume $N_{m,c}^{received,CBG} = 0$ .

It should be noted that for a serving cell that is not configured with multi-PDSCH scheduling, when PDSCH-CodeBlockGroupTransmission is configured (in this case, harq-ACK-SpatialBundlingPUCCH definitely cannot be configured), $N_{m,c}^{received,CBG}$ is a number of CBGs received by the terminal in the PDSCH reception occasion m of a serving cell c, and the PDSCH reception that carries these CBGs is scheduled by DCI (that is, corresponding to non-fallback DCI) supporting CBG-based PDSCH reception. Otherwise, $N_{m,c}^{received,CBG} = 0$ .

In an implementation, the values and meanings of $N_{m,c}^{received}$ can be differently determined according to the following cases:

Case one

For a serving cell configured with multi-PDSCH scheduling (CBG transmission cannot be configured at the same time), when the application of time domain bundling is not configured, the meaning and value of $N_{m,c}^{received}$ can be differently determined according to the following cases (Case 1 and Case 2):

Case 1: When the UE receives a PDSCH in the PDSCH reception occasion m, there are specifically the following case 1-1 to case 1-2.

Case 1-1: When harq-ACK-SpatialBundlingPUCCH is not configured, $N_{m,c}^{received}$ is a number of transport blocks (Transport Block, TB) received by the UE in a PDSCH reception occasion m of a serving cell c.

Case 1-2: When harq-ACK-SpatialBundlingPUCCH is configured, $N_{m,c}^{received}$ is a number of PDSCH receptions received by the UE in a PDSCH reception occasion m of a serving cell c.

Case 2: When the UE receives the SPS PDSCH release for the PDSCH reception occasion m of the serving cell c, and feeds back a corresponding HARQ-ACK in the type-1 codebook for this SPS PDSCH release, $N_{m,c}^{received} = 1$ .

Case two

For a serving cell configured with multi-PDSCH scheduling (CBG transmission cannot be configured at the same time), when the application of time domain bundling is configured, the meaning and value of $N_{m,c}^{received}$ can be differently determined according to the following two sub-cases (sub-case 1 and sub-case 2):
Sub-case 1 indicates that the terminal receives a PDSCH in the PDSCH reception occasion m (the first occasion). Sub-case 2 indicates that the terminal needs to feed back the corresponding HARQ-ACK for the SPS PDSCH release (release) in the PDSCH reception occasion m.

For the above sub-case 2, when the UE receives the SPS PDSCH release for the PDSCH reception occasion m of the serving cell c, and feeds back a corresponding HARQ-ACK in the type-1 codebook for this SPS PDSCH release, $N_{m,c}^{received} = 1$.

It should be noted that in actual applications, there may also be application scenarios that satisfy neither the above sub-case 1 nor the above sub-case 2, for example: a case in which in the PDSCH reception occasion m, the UE neither receives a PDSCH nor needs to feed back the corresponding HARQ-ACK for the SPS PDSCH release. In the embodiments of the present application, this case can be covered by the above sub-case 1, or in the case in which neither the above sub-case 1 nor the above sub-case 2 is satisfied, the value of $N_{m,c}^{received}$ can be independently determined (that is, $N_{m,c}^{received} = 0$ is determined), and this does not affect determination of the final value of $N_{m,c}^{received}$.

The following is a detailed description of sub-case 1 based on the configuration of spatial bundling:

<When application of spatial bundling is not configured>

As an optional implementation, in a case that it is configured that the HARQ-ACK is to be transmitted by using time domain bundling and not using spatial bundling, if the terminal receives PDSCH(s) within a first occasion, the determining, by the terminal, a first variable according to the target information includes:

determining, by the terminal, that the first variable is equal to a number of TBs corresponding to target scheduled row(s),

where the target scheduled row(s) includes scheduled row(s) mapped to the first occasion, or the target scheduled row(s) includes scheduled row(s) determined according to a first PDSCH mapped to the first occasion based on an association with the last time domain resource allocation record, and the scheduled row(s) includes: row(s) actually scheduled or configured for the terminal from a time domain resource allocation TDRA table.

The first occasion may be any PDSCH reception occasion m. The scheduled row in the embodiments of the present application can be understood as: a current TDRA table row of the terminal that is actually scheduled (that is, the terminal receives downlink scheduling DCI that indicates this TDRA table row) or is configured (that is, configured and activated semi-persistent scheduling (Semi-Persistent Scheduling, SPS) configuration (Config) uses this TDRA table row) has corresponding other scheduling information (for example: other indication information in the scheduling DCI) or configuration information (for example: configuration information in corresponding SPS Config and other indication information in activated DCI).

Sub-case 1-1: The scheduled row mapped to the first occasion can be understood as: a scheduled row is mapped to the PDSCH reception occasion m based on the last SLIV of the row, or in other words, the last SLIV of a scheduled row is mapped to the PDSCH reception occasion m. Generally, a number of scheduled rows mapped to the PDSCH reception occasion m is 0 or 1. Alternatively, the number of scheduled rows mapped to the PDSCH reception occasion m can also be greater than 1.

It is assumed herein that the number of scheduled rows mapped to the PDSCH reception occasion m is M, and M can be an integer greater than or equal to 0.

In this way, in a case that M=0, the number of TBs corresponding to the target scheduled row is 0.

In a case that M>0, the number of TBs corresponding to the target scheduled row may be determined in any one of the following manners:

a sum of numbers of TBs enabled for all the M target scheduled rows;
a number of TBs enabled for the M target scheduled rows;
a sum of numbers of TBs configured for all the M target scheduled rows; and
a number of TBs configured for the M target scheduled rows.

Manner 1

A sum of numbers of TBs enabled for all the M target scheduled rows. The numbers of TBs enabled for different target scheduled rows can be the same or different.

Optionally, in a case that the serving cell is not configured to allow dual codeword transmission, the number of TBs enabled for each of the target scheduled row(s) is equal to for

in a case that the serving cell is configured to allow dual codeword transmission, the number of TBs enabled for the target scheduled row is equal to any one of the following:

in a case that a first TB disabling mode is used, a number of TBs that are uniformly enabled by a piece of downlink control information DCI corresponding to the target scheduled row, and

in a case that a second TB disabling mode is used, a number of TBs that are actually enabled by a piece of DCI corresponding to the target scheduled row.

In an implementation, the TB disabling (TB disabling) mode can be understood as: when the higher layer configures that dual codeword transmission is allowed (that is, for a given serving cell of the UE, a maximum number of codewords scheduled by DCI (maxNrofCodeWordsScheduledByDCI) and configured for an active (Active) DL BWP of the cell is n2), it can be determined in a specific manner whether a TB of one or at least two valid (Valid) PDSCHs scheduled by a piece of DCI is enabled (that is, actually scheduled) or disabled (that is, not actually scheduled).

The valid PDSCH means: among one or at least two PDSCHs scheduled by a single piece of DCI, a PDSCH that does not conflict with a semi-static UL symbol (Semi-static UL symbol), or can be understood as a scheduled (Scheduled) PDSCH that can be actually transmitted. The opposite of the valid PDSCH is an invalid PDSCH, and the invalid PDSCH means: among one or at least two PDSCHs scheduled by a single piece of DCI, a PDSCH that conflicts with a semi-static, or can be understood as a scheduled PDSCH that cannot be actually transmitted. The scheduled PDSCH can be understood as: a PDSCH among one or at least two PDSCHs scheduled by a single piece of DCI, and corresponds to an entry/SLIV configured in a row in the TDRA table indicated by the DCI, and may be a valid PDSCH or an invalid PDSCH.

In an implementation, TB disabling may include a first TB disabling mode (which may also be called TB disabling mode 1) and a second TB disabling mode (which may also be called TB disabling mode 2).

The TB disabling mode 1 means: for a TB (for example: the first TB or the second TB), the enabling/disabling status are uniformly determined for all valid PDSCHs scheduled by a single piece of DCI. For example: for a TB, when the DCI indicates that a modulation and coding scheme (Modulation and Coding Scheme, MCS) corresponding to this TB satisfies IMCS=26, and a value of a redundancy version (Redundancy Version, RV) bit sequence corresponding to this TB in the DCI is a predefined 0/1 sequence (), it indicates that the TB of each valid PDSCH scheduled by this DCI is disabled. When the above condition is not satisfied, it is considered that the TB of each Valid PDSCH scheduled by this DCI is enabled.

An RV bit sequence corresponding to a TB in the DCI can be any one of the following:

1) The sequence is formed by sequentially cascading all RV bits reserved for this TB in the DCI. For example, assuming that a maximum number of entries/SLIVs configured in a row of the TDRA table is M, when a number of PDSCHs scheduled by a piece of DCI is greater than 1, M RV bits are reserved for a TB in the DCI, that is, an RV bit sequence corresponding to this TB contains M bits.

2) The sequence is formed by sequentially cascading all RV bits corresponding to a PDSCH scheduled by this DCI among all the RV bits reserved for this TB in the DCI. For example: when a number N of PDSCHs scheduled by a piece of DCI is greater than 1 (and N<=M), M RV bits are reserved for a TB in this DCI, where only N RV bits are actually used to indicate RV information of the scheduled PDSCH, that is, the RV bit sequence corresponding to this TB contains N bits.

3) The sequence is formed by sequentially cascading all RV bits corresponding to a valid PDSCH scheduled by this DCI among all the RV bits reserved for this TB in the DCI. For example: when a number N of PDSCHs scheduled by a piece of DCI is greater than 1 (and N<=M) and contains N1 valid PDSCHs (and NI<=N), M RV bits are reserved for a TB in this DCI, where only N1 RV bits are actually used to indicate RV information of the valid PDSCH, that is, the RV bit sequence corresponding to this TB contains N1 bits.

The predefined 0/1 sequence can be an all-0 or all-1 sequence with the same length as the RV bit sequence, for example: in the manner 1), the predefined 0/1 sequence can be an all-1 sequence of a length M. In the manner 2), the predefined 0/1 sequence can be an all-1 sequence of a length N. In the manner 3), the predefined 0/1 sequence can be an all-1 sequence of a length N1.

The TB disabling mode 2 means: for a TB (for example, the first TB or the second TB), the enabling/disabling status is independently determined for each valid PDSCH scheduled by a single piece of DCI.

For example: for a TB and a valid PDSCH, when the DCI indicates that an MCS corresponding to this TB satisfies IMCS=26, and a value of an RV bit corresponding to this TB and this valid PDSCH in the DCI is a predefined value, it indicates that the TB of this valid PDSCH is disabled. When the above condition is not satisfied, it is considered that this TB of this valid PDSCH is enabled.

For another example: an RV bit corresponding to a TB and a valid PDSCH in DCI only contains a single bit, and a predefined value can be 1 or a value corresponding to rvid=2.

In other words, in this implementation, when the serving cell is not configured to allow dual codeword transmission, the number of TBs enabled for each target scheduled row can be considered as 1. When the serving cell is configured to allow dual codeword transmission, the number of TBs enabled for each target scheduled row can be determined by any one of the following:

when the TB disabling mode 1 is used, the number of TBs uniformly enabled for the DCI corresponding to the target scheduled row; and

when the TB disabling mode 2 is used, the number of TBs actually enabled for the DCI corresponding to the target scheduled row.

For a TB (for example, the first TB or the second TB), when the DCI corresponding to the target scheduled row enables the TB for at least one valid PDSCH, it can be considered that the TB is actually enabled; otherwise, it is considered that the TB is actually disabled.

Manner 2

A number of TBs enabled for the M target scheduled rows.

In some optional implementations, when the serving cell is not configured to allow dual codeword transmission, the number of TBs enabled for the M target scheduled row(s) is 1.

In some other optional implementations, the number of TB enabled for the M target scheduled row(s) includes:

a maximum value of numbers of TBs enabled for the M target scheduled row(s); and
a number of enabled TBs determined according to the M target scheduled row(s).

Specifically, when the serving cell is configured to allow dual codeword transmission, the number of TBs enabled for the M target scheduled row(s) can be determined by any one of the following:
A maximum value of numbers of TBs enabled for the target scheduled row(s) is obtained.

In an implementation, the number of TBs enabled for each target scheduled row may be determined in the same manner as in manner 1 in which when the serving cell is configured to allow dual codeword transmission, the number of TBs enabled for the target scheduled row is determined (for example: the number of TB enabled for each target scheduled row is determined according to the TB disabling mode), which is not described again herein.

2) Determine the number of enabled TBs based on the M target scheduled rows.

That is, the number of enabled TBs is determined based on the enabling status of TBs in the M target scheduled rows. For a TB (for example, the first TB or the second TB), when at least one of the M target scheduled rows enables the TB, it is determined that the TB is enabled. It can be understood that the number of enabled TBs is determined as 1 or 2.

Manner 3

A sum of numbers of TBs configured for all the M target scheduled rows.

In an implementation, in a case that the serving cell is not configured to allow dual codeword transmission, the number of TBs configured for the target scheduled row may be considered as 1; or

in a case that the serving cell is configured to allow dual codeword transmission, the number of TBs configured for the target scheduled row may be considered as 2.

The sum of the numbers of TBs configured in target scheduled rows = M $\times$ the number of TBs configured for each scheduled row.

Manner 4

A number of TBs configured for the M target scheduled rows. In an implementation, the number of TBs configured for the M target scheduled rows can be directly determined based on whether the serving cell is configured to allow dual codeword transmission. Specifically, the value is 1 when it is not configured to allow dual codeword transmission; otherwise, the value is 2.

In the above sub-case 1-1, $N_{m,c}^{received}$ is the number of TBs corresponding to the scheduled row mapped to the PDSCH reception occasion m.

Sub-case 1-2: When the target scheduled row includes a scheduled row determined according to the first PDSCH mapped to the first occasion and based on an association with the last time domain resource allocation record, the first PDSCH may be mapped to the PDSCH reception occasion m based on the DL slot in which the first PDSCH is located and an SLIV corresponding to the first PDSCH.

The first PDSCH may be a dynamically scheduled PDSCH or an SPS PDSCH, and the first PDSCH may be a valid PDSCH or an invalid PDSCH.

The first PDSCH is based on the target scheduled row corresponding to the last SLIV association, which can be understood as: this first PDSCH is associated with or corresponds to the last SLIV of the target scheduled row, or in other words, this PDSCH is a PDSCH corresponding to the last entry/SLIV among one or more entries/SLIVs configured in the scheduled row when scheduling/configuring the scheduled row.

It is understood that a difference between the manner of determining $N_{m,c}^{received}$ in this sub-case 1-2 and the manner of determining $N_{m,c}^{received}$ in the above sub-case 1-1 is mainly as follows: in the sub-case 1-2, it is considered that when configuring application of time domain bundling, a PDSCH or an SLIV corresponding to the PDSCH (including a DL slot in which the PDSCH/SLIV is located) is mapped to an occasion, instead of mapping a TDRA table row to an occasion. However, this is only a difference in understanding or description, and the essence or output is the same.

In an implementation, the scheduled row has corresponding other scheduling information (for example: other indication information in the scheduling DCI) or configuration information (for example: configuration information in corresponding SPS Config and other indication information in activated DCI). In this way, after determining the PDSCH mapped to the PDSCH reception occasion m, scheduled rows (for example, M scheduled rows) corresponding to this/these PDSCH/PDSCHs mapped to the PDSCH reception occasion m can be further determined based on the last SLIV association and based on the other scheduling information or configuration information. Then, the value of $N_{m,c}^{received}$ can be determined by following related operations for determining $N_{m,c}^{received}$ in sub-case 1-1 (for example: any one of manner 1 to manner 4).

Optionally, in a case that a PDSCH corresponding to the last time domain resource allocation record of any scheduled row is required to be a valid PDSCH, the determining, by the terminal, that the first variable is equal to the number of TBs corresponding to the target scheduled row(s) includes:

if the first PDSCH exists and the first PDSCH is associated with or corresponds to the last time domain resource allocation record of any of the target scheduled row(s), determining, by the terminal, that the target number of TBs is equal to a number of TBs enabled or configured for the first PDSCH; and

if the first PDSCH does not exist or the first PDSCH is not associated with or does not correspond to the last time domain resource allocation record of any of the target scheduled row(s), determining, by the terminal, that the first variable is 0.

In an implementation, when the PDSCH corresponding to the last SLIV of any scheduled row is required to be a valid PDSCH, if there is a PDSCH mapped to the PDSCH reception occasion m and this PDSCH is associated with or corresponds to the last SLIV of a scheduled row, the number of TBs enabled for this PDSCH (which needs to be a valid PDSCH) or the configured number of TBs can be directly used as the value of $N_{m,c}^{received}$. Otherwise, $N_{m,c}^{received}=0$.

<When application of spatial bundling is configured>

As an optional implementation, in a case that the codebook used by the HARQ-ACK is a type-1 codebook, and it is configured that the type-1 codebook is to be transmitted by using time domain bundling and using spatial bundling, if the terminal receives PDSCH(s) within a first occasion, the determining, by the terminal, a first variable according to the target information includes:

determining, by the terminal, that the first variable is equal to a number of target scheduled row(s); where the target scheduled row(s) includes scheduled row(s) mapped to the first occasion, or the target scheduled row(s) includes scheduled row(s) determined according to a first PDSCH mapped to the first occasion based on an association with the last time domain resource allocation record, and the scheduled row(s) includes: row(s) actually scheduled or configured for the terminal from a TDRA table.

In an implementation, in a case that the codebook used by the HARQ-ACK is a type-1 codebook, and it is configured that the type-1 codebook is to be transmitted by using time domain bundling and using spatial bundling, the value of $N_{m,c}^{received}$ can be determined in the following two manners.

Manner 1

$N_{m,c}^{received}$ is the number of target scheduled rows mapped to the PDSCH reception occasion m.

In some implementations, assuming that the number of target scheduled rows mapped to the PDSCH reception occasionm is M, $N_{m,c}^{received} = M$ .

In some other embodiments, when M=0, $N_{m,c}^{received} = 0$ is determined. When M>0, $N_{m,c}^{received} = 1$ is determined.

Manner 2

$N_{m,c}^{received}$ is the number of scheduled rows corresponding, based on the last SLIV association, to the PDSCH mapped to the PDSCH reception occasion m.

In an implementation, after target scheduled rows corresponding to the PDSCH (for example, M target scheduled rows) are determined based on the PDSCH mapped to PDSCH reception occasion m (or based on the scheduling information/configuration information of the scheduled row or the like) and based on the last SLIV association, the value of $N_{m,c}^{received}$ can be determined by following related operations of the manner 1 in the above sub-case 2. This is not repeated herein.

Optionally, in a case that a PDSCH corresponding to the last time domain resource allocation record of any scheduled row is required to be a valid PDSCH, the determining, by the terminal, that the first variable is equal to the number of the target scheduled row(s) includes any one of the following:

if the first PDSCH exists and the first PDSCH is associated with or corresponds to the last time domain resource allocation record of any of the target scheduled row(s), determining, by the terminal, that the number of the target scheduled row(s) is 1; and
if the first PDSCH does not exist or the first PDSCH is not associated with or does not correspond to the last time domain resource allocation record of any of the target scheduled row(s), determining, by the terminal, that the number of the target scheduled row(s) is 0.

In this implementation, when the PDSCH corresponding to the last SLIV of the scheduled row is always required to be a valid PDSCH, if there is a PDSCH mapped to the PDSCH reception occasion m and this PDSCH is associated with or corresponds to the last SLIV of a scheduled row, $N_{m,c}^{received} = 1$ is determined. Otherwise, $N_{m,c}^{received} = 0$ is determined.

Embodiment 2 Calculation of $n_{HARQ-ACK}$ of the type-2 codebook

As an optional implementation, in a case that the codebook used by the HARQ-ACK is a type-2 codebook, the determining, by the terminal, a first power control parameter according to target information related to the multi-PDSCH scheduling includes:

in a case that no cell in the PUCCH cell group is configured with time domain bundling, determining, by the terminal, the first power control parameter according to a first sub-codebook and a second sub-codebook, where the PUCCH cell group includes serving cell(s) of the terminal, the first sub-codebook corresponds to a granularity of single HARQ-ACK unit, and the second sub-codebook corresponds to a granularity of multiple HARQ-ACK units;
in a case that cells configured with multi-PDSCH scheduling in the PUCCH cell group are all configured with time domain bundling, and a number of configured bundling groups is equal to 1, determining, by the terminal, the first power control parameter according to the first sub-codebook; and
in a case that at least one of cells configured with multi-PDSCH scheduling in the PUCCH cell group is configured with time domain bundling, and a number of configured bundling groups is great than 1, determining, by the terminal, the first power control parameter according to the first sub-codebook and the second sub-codebook.

The calculation of $n_{HARQ-ACK}$ of the type-2 codebook is separately performed for each sub-codebook in Rel-15/16, which specifically includes a sub-codebook for HARQ-ACK feedback at a TB granularity and a sub-codebook for HARQ-ACK feedback at a CBG granularity.

In the embodiments of the present application, when at least one serving cell corresponding to a PUCCH cell group is configured with multi-PDSCH scheduling, CBG transmission cannot be configured for any serving cell in this PUCCH cell group. Therefore, there is no need to consider calculation of $n_{HARQ-ACK}$ of the sub-codebook for HARQ-ACK feedback at the CBG granularity.

In the embodiments of the present application, when at least one serving cell corresponding to a PUCCH cell group is configured with multi-PDSCH scheduling, the setting of the sub-codebook has the following different cases:

Case one

No serving cell corresponding to this PUCCH cell group is configured with time domain bundling.

In this case, the type-2 codebook involves two sub-codebooks.

The first sub-codebook can also be called the first piece of sub-codebook. The first sub-codebook corresponds to a single HARQ-ACK granularity, that is, only a single HARQ-ACK needs to be fed back for each DCI/SPS PDSCH. In an implementation, at least one of the following may be placed in the first sub-codebook:

a HARQ-ACK corresponding to DCI scheduling a single PDSCH;
a HARQ-ACK corresponding to DCI that schedules no PDSCH but requires HARQ-ACK feedback; and
a HARQ-ACK corresponding to an SPS PDSCH.

The second sub-codebook can also be called the second piece of sub-codebook. The second sub-codebook corresponds to multiple HARQ-ACK granularities, that is, multiple HARQ-ACKs (that is, more than one HARQ-ACK) need to be fed back for each DCI. The HARQ-ACK corresponding to the DCI that schedules more than one PDSCH can be placed in the second sub-codebook.

Case two

Serving cells in the PUCCH cell group that are configured with multi-PDSCH scheduling are all configured with time domain bundling, and the number of configured bundling groups is 1.

Case two can be understood as: all HARQ-ACKs corresponding to DCI that schedules more than one PDSCH are subject to the time domain bundling operation and placed in the first sub-codebook. Therefore, in this case, the type-2 codebook involves a single sub-codebook.

In case two, the (unique) first sub-codebook corresponds to a single HARQ-ACK granularity, that is, only a single HARQ-ACK needs to be fed back for each DCI/SPS PDSCH. Compared with case one, a bundled HARQ-ACK corresponding to the HARQ-ACK corresponding to the DCI that schedules more than one PDSCH can be additionally placed in the first sub-codebook. In other words, a HARQ-ACK obtained after the HARQ-ACK corresponding to the DCI that schedules more than one PDSCH is subject to time domain bundling can be additionally placed in the first sub-codebook.

Case three

At least one of the serving cells in the PUCCH cell group that are configured with multi-PDSCH scheduling is configured with time domain bundling, and the number of configured bundling groups is greater than 1.

Case three can be understood as: there is at least a HARQ-ACK that corresponds to DCI that schedules more than one PDSCH and that is subject to the time domain bundling operation and placed in the second sub-codebook.

In case three, the type-2 codebook involves two sub-codebooks, and the first sub-codebook corresponds to a single HARQ-ACK granularity, that is, only a single HARQ-ACK needs to be fed back for each DCI/SPS PDSCH. The second sub-codebook corresponds to multiple HARQ-ACK granularities, that is, multiple HARQ-ACKs (that is, more than one HARQ-ACK) need to be fed back for each DCI.

For example: it is assumed that a total of N (N>0) serving cells in this PUCCH cell group are configured with multi-PDSCH scheduling, and M (M>0 and M<=N) serving cells are configured with time domain bundling. Among these M Serving cells, M2 (M2>0 and M2<=M) serving cells are configured with more than 1 bundling group, and M1 (M1=M-M2) serving cells are configured with 1 bundling group. In this case, the HARQ-ACK corresponding to the DCI that schedules more than one PDSCH (when N>M), and/or a bundled HARQ-ACK corresponding to the HARQ-ACK corresponding to the DCI that schedules more than one PDSCH (or in other words, the HARQ-ACK obtained after the HARQ-ACK corresponding to the DCI that schedules more than one PDSCH is subject to time domain bundling) can be placed in the second sub-codebook.

In an implementation, the HARQ-ACKs corresponding to the M1 serving cells configured with 1 bundling group are placed in the first sub-codebook. It can be seen that compared with case one, in case three, the HARQ-ACKs placed in the first sub-codebook are basically the same. The difference is that when M1>0, a bundled HARQ-ACK corresponding to the HARQ-ACK corresponding to the DCI that schedules more than one PDSCH can be additionally placed in the first sub-codebook (in other words, a HARQ-ACK obtained after the HARQ-ACK corresponding to the DCI that schedules more than one PDSCH is subject to time domain bundling can be additionally placed in the first sub-codebook).

Case one does not involve the time domain bundling operation. Both case two and case three involve time domain bundling operations, and the difference between case two and case three is: the HARQ-ACK obtained after the HARQ-ACK corresponding to the DCI that schedules more than one PDSCH is subject to time domain bundling is not placed in the second sub-codebook for case two, but can be placed in the second sub-codebook for case three.

In some implementations, when the type-2 codebook contains only the first sub-codebook, $n_{HARQ-ACK}$ is calculated only for the first sub-codebook.

In some other implementations, when the type-2 codebook contains two sub-codebooks, $n_{HARQ-ACK}$ is calculated separately for the first sub-codebook and the second sub-codebook and then the sum of the two $n_{HARQ-ACK}$ is obtained.

Optionally, the determining, by the terminal, the first power control parameter according to the first sub-codebook and the second sub-codebook includes:

> determining, by the terminal, a first parameter according to a second calculation rule corresponding to the first sub-codebook, and determining a second parameter according to a third calculation rule corresponding to the second sub-codebook; and
> determining, by the terminal, that the first power control parameter is equal to a sum of the first parameter and the second parameter.

The first parameter can be understood as $n_{HARQ-ACK}$ determined according to the second calculation rule corresponding to the first sub-codebook. In order to facilitate the distinction, the first parameter is called $n_{HARQ-ACK,first}$ in the following embodiments. The second parameter can be understood as $n_{HARQ-ACK}$ determined according to the third calculation rule corresponding to the second sub-codebook. In order to facilitate the distinction, the second parameter is called $n_{HARQ-ACK,second}$ in the following embodiments.

Processes of determining $n_{HARQ-ACK,first}$ and $n_{HARQ-ACK,second}$ are separately described below.

Calculation of $n_{HARQ-ACK,first}$

As an optional implementation, the determining, by the terminal, the first power control parameter according to the first sub-codebook includes:

> determining, by the terminal, a third variable according to the target information; and
> determining, by the terminal, the first power control parameter based on the second calculation rule and the third variable.

In an implementation, the third variable may be the number $N_{m,c}^{received}$ of valid HARQ-ACK bits determined by the terminal. Based on the foregoing analysis, it can be seen that the first sub-codebook corresponds to a single HARQ-ACK granularity. The HARQ-ACK corresponding to the DCI that schedules a single PDSCH, the HARQ-ACK corresponding to the DCI that schedules no PDSCH but requires HARQ-ACK feedback, and the HARQ-ACK corresponding to the SPS PDSCH are placed in the first sub-codebook. For case two/three, the HARQ-ACK obtained after the HARQ-ACK corresponding to the DCI that schedules more than one PDSCH is subject to time domain bundling can also be placed in the first Sub-codebook.

In the embodiments of the present application, the second calculation rule can be expressed by the following formula (7):

$$n_{HARQ-ACK,first} = \left( \left( V_{DAI,m_{last}}^{DL} - \sum_{c=0}^{N_{cells}^{DL}-1} U_{DAI,c} \right) mod(T_D) \right) N_{TB,max}^{DL} + \sum_{c=0}^{N_{cells}^{DL}-1} \left( \sum_{m=0}^{M-1} N_{m,c}^{received} + N_{SPS,c} \right)$$

Considering that "the HARQ-ACK obtained after the HARQ-ACK corresponding to the DCI that schedules more than one PDSCH is subject to time domain bundling can also be placed in the first Sub-codebook", $N_{m,c}^{received}$ in the above formula (7) can be differently determined based on the following cases 1.1 and 1.2:

Case 1.1

The terminal detects, in the PDCCH monitoring occasion m, the DCI that schedules a PDSCH.

The DCI that schedules a PDSCH may include: DCI that schedules a single PDSCH; and DCI that schedules at least two PDSCHs. For the above case two or case three, when the serving cell c is configured with multi-PDSCH scheduling and is configured with time domain bundling and the number of configured bundling groups is 1, in decoding results of at least two scheduled PDSCHs, a single HARQ-ACK bit is obtained based on time domain bundling and placed in the first Sub-codebook, which is not described again herein.

Case 11 can be specifically divided into the following case 1.1.1 and case 1.1.2:

Case 1.1.1

When application of spatial bundling is not configured, $N_{m,c}^{received}$ can be determined in the following manner:

As an optional implementation, in a case that the terminal detects, in a second occasion, DCI that schedules PDSCH(s) and the terminal is not configured to apply spatial bundling, the determining, by the terminal, a third variable based on the target information includes:

determining, by the terminal, that the third variable is equal to a number of TBs actually enabled for the DCI that schedules PDSCH(s) and are detected by the terminal in the second occasion.

The second occasion may be a PDCCH monitoring occasionm, that is, the third variable $N_{m,c}^{received}$ is a number of TBs actually enabled by a piece of DCI that schedules a PDSCH and that is detected by the terminal in the PDCCH monitoring occasion m.

In an implementation, in a case that the serving cell is not configured to allow dual codeword transmission, the number of TBs actually enabled for each piece of DCI that schedules PDSCH(s) may be equal to 1; or

the number of TBs actually enabled for each piece of DCI that schedules PDSCH(s) can be any one of the following:

in a case that the first TB disabling mode is used, a number of TBs that are uniformly enabled for each piece of DCI that schedules PDSCH(s); and

in a case that the second TB disabling mode is used, a number of TBs that are actually enabled for each piece of DCI that schedules PDSCH(s).

For a TB (for example, the first TB or the second TB), when the DCI enables the TB for at least one valid PDSCH, it can be considered that the TB is actually enabled; otherwise, it is considered that the TB is actually disabled.

In an implementation, when the terminal is only allowed to monitor, for a single serving cell in the PDCCH monitoring occasion m, a single piece of DCI that schedules PDSCH(s), a number of TBs that are actually enabled for a single piece of detected DCI that schedules PDSCH(s) is used as $N_{m,c}^{received}$. When the terminal is allowed to monitor, for a single serving cell in the PDCCH monitoring occasion m, more than one piece of DCI that schedules PDSCH(s), a sum of numbers of TBs that are actually enabled for various pieces of detected DCI that schedule the PDSCH is obtained as $N_{m,c}^{received}$.

As another optional implementation, in a case that the terminal detects, in a second occasion, DCI that schedules PDSCH(s) and the terminal is not configured to apply spatial bundling, the determining, by the terminal, a third variable based on the target information includes:

determining, by the terminal, that the third variable is equal to a number of TBs configured for the DCI that schedules PDSCH(s) and are detected by the terminal in the second occasion.

Similar to the third variable being equal to the number of TBs actually enabled for the DCI that schedules PDSCH(s) and that is detected by the terminal in the second occasion, when the serving cell is not configured to allow dual codeword transmission, the number of TBs configured for each piece of DCI that schedules PDSCH(s) can be equal to 1.

In addition, when the serving cell is configured to allow dual codeword transmission, the number of TBs configured for each piece of DCI that schedules PDSCH(s) may be equal to 2.

Optionally, the determining, by the terminal, a third variable according to the target information includes:

in a case that the terminal is allowed to detect, for a single serving cell in the second occasion, only a single piece of DCI that schedules PDSCH(s), determining, by the terminal, that the third variable is equal to a number of TBs that are actually enabled or configured by the single piece of DCI that schedules PDSCH(s) and that is detected by the terminal; or

in a case that the terminal is allowed to detect, for a single serving cell in the second occasion, at least two pieces of DCI that schedules PDSCH(s), determining, by the terminal, that the third variable is equal to a sum of numbers of TBs that are actually enabled or configured by all pieces of DCI that schedule the PDSCH and are detected by the terminal.

The second occasion can be a PDCCH monitoring occasionm, and when the terminal is only allowed to monitor, for a single serving cell in the PDCCH monitoring occasion m, a single piece of DCI that schedules PDSCH(s), a number of TBs that are configured for a single piece of detected DCI that schedules PDSCH(s) is used as $N_{m,c}^{received}$. When the terminal is allowed to monitor, for a single serving cell in the PDCCH monitoring occasion m, more than one piece of DCI that schedules PDSCH(s), a sum of numbers of TBs that are configured for various pieces of detected DCI that schedule the PDSCH is obtained as $N_{m,c}^{received}$, or $N_{m,c}^{received}$=number of pieces of detected DCI that schedule the PDSCH×number of TBs that are configured for each piece of detected DCI that schedules PDSCH(s).

Case 1.1.2

Optionally, in a case that the terminal detects, in a second occasion, DCI that schedules PDSCH(s) and is configured to apply spatial bundling, the determining, by the terminal, a third variable based on the target information includes:
determining, by the terminal, that the third variable is equal to a number of pieces of DCI that schedule the PDSCH and are detected by the terminal in the second occasion.

In this case 1.1.2, when application of Spatial bundling is configured, $N_{m,c}^{received}$ is the number of pieces of DCI that schedule the PDSCH and that are detected by the terminal in the PDCCH monitoring occasion m.

Case 1.2

The terminal detects, in the PDCCH monitoring occasion m, DCI that schedules no PDSCH but requires HARQ-ACK feedback.

In the above case 1.2, $N_{m,c}^{received}$ is a number of pieces of DCI that are detected by the terminal in the PDCCH monitoring occasion m for the serving cell c and that do not schedule PDSCH reception but need feedback of corresponding HARQ-ACKs.

It should be noted that when only case 1.1 or case 1.2 is satisfied, $N_{m,c}^{received}$ corresponding to the satisfied case 1.1 or case 1.2 can be directly used. When both case 1.1 and case 1.2 are satisfied, $N_{m,c}^{received}$ corresponding to the cases are added as the final $N_{m,c}^{received}$. When neither case 1.1 nor case 1.2 is satisfied, $N_{m,c}^{received} = 0$.

Calculation of $n_{HARQ-ACK,second}$

Based on the foregoing analysis, it can be seen that the second Sub-codebook corresponds to multiple HARQ-ACK granularities. The HARQ-ACK corresponding to the DCI that schedules more than one PDSCH, and/or the HARQ-ACK obtained after the HARQ-ACK corresponding to the DCI that schedules more than one PDSCH is subject to time domain bundling can be placed in the second Sub-codebook.
Optionally, the determining, by the terminal, a second parameter according to a third calculation rule corresponding to the second sub-codebook includes:

determining, by the terminal, a fourth variable according to the target information; and
determining, by the terminal, the second parameter based on the third calculation rule and the fourth variable.

The fourth variable may include $N_{m,c}^{received,multi}$, and is used to reflect the actual scheduling case of the type-1 DCI detected by the terminal in the PDCCH detection occasion m for the serving cell c (specifically as shown in case 2.1 below). The type-1 DCI may be DCI used to schedule more than one PDSCH.
In an implementation, for the third calculation rule, the second parameter can be differently determined based on the following cases 2.1 and 2.2:

Case 2.1

The HARQ-ACK obtained after the HARQ-ACK corresponding to the DCI that schedules more than one PDSCH is subject to time domain bundling is not involved or placed in the second Sub-codebook (corresponding to case one/case two).

Optionally, the determining, by the terminal, a second parameter according to a third calculation rule corresponding to the second sub-codebook includes:

in a case that the second sub-codebook does not include a target HARQ-ACK and the target HARQ-ACK includes a HARQ-ACK obtained by performing time domain bundling on a first HARQ-ACK, determining, by the terminal, the second parameter according to the following formula (7):

$$
n_{\text{HARQ-ACK,second}} = \left( \left( V_{\text{DAI},m_{\text{last}}}^{\text{DL}} - \sum_{c=0}^{N_{\text{cells}}^{\text{DL,multi}}-1} U_{\text{DAI},c}^{\text{multi}} \right) \mod(T_D) \right) N_{\text{HARQ-ACK}}^{\max} + \sum_{c=0}^{N_{\text{cells}}^{\text{DL,multi}}-1} \sum_{m=0}^{M-1} N_{m,c}^{\text{received,multi}}
$$

The first HARQ-ACK includes HARQ-ACK(s) corresponding to piece(s) of DCI each of which is used to schedule at least two PDSCHs, and $n_{\text{HARQ-ACK,second}}$ indicates the second parameter determined according to the third calculation rule corresponding to the second sub-codebook. $T_D = 2^{N_{\text{C-DAI}}^{\text{DL}}}$, and $N_{\text{C-DAI}}^{\text{DL}}$ indicates a number of bits occupied by a counter (Counter) DAI. $N_{\text{cells}}^{\text{DL,multi}}$ indicates a number of serving cells configured with multi-PDSCH scheduling in the PUCCH cell group.

When $N_{\text{cells}}^{\text{DL,multi}} = 1$, $V_{\text{DAI},m_{\text{last}}}^{\text{DL}}$ indicates a value of a counter DAI carried by the last piece of type-1 DCI for any serving cell that the terminal detects in M PDCCH monitoring occasions, and the type-1 DCI includes DCI each piece of which is used to schedule more than one PDSCH.

When $N_{\text{cells}}^{\text{DL,multi}} > 1$, $V_{\text{DAI},m_{\text{last}}}^{\text{DL}}$ indicates a value of a total DAI carried by the last piece of type-1 DCI for any serving cell that the terminal detects in M PDCCH monitoring occasions.

When the terminal detects no type-1 DCI in the M PDCCH monitoring occasions for any serving cell, $V_{\text{DAI},m_{\text{last}}}^{\text{DL}} = 0$. $U_{\text{DAI},c}^{\text{multi}}$ indicates a total number of pieces of type-1 DCI detected by the terminal in M PDCCH monitoring occasions for a serving cell c. $N_{\text{HARQ-ACK}}^{\max}$ indicates a maximum value of $N_{\text{TB},c}^{\text{DL}} \cdot N_{\text{PDSCH},c}^{\max}$ obtained by traversing $N_{\text{cells}}^{\text{DL}}$ serving cells. $N_{\text{PDSCH},c}^{\max}$ is a maximum number of PDSCH receptions that can be scheduled by a single piece of type-1 DCI for the serving cell c.

When application of spatial bundling is not configured, $N_{\text{TB},c}^{\text{DL}}$ is a maximum number of codewords that can be scheduled by DCI and are configured for the serving cell c (that is, a value of a parameter of maxNrofCodeWordsScheduledByDCI); when application of spatial bundling is configured, $N_{\text{TB},c}^{\text{DL}} = 1$.

If spatial bundling is not configured, $N_{m,c}^{\text{received,multi}}$ is a total number of transport blocks actually scheduled by all pieces of type-1 DCI detected by the UE in the PDCCH detection occasion m for the serving cell c; and if spatial bundling is configured, $N_{m,c}^{\text{received,multi}}$ is a total number of valid PDSCHs scheduled by all pieces of type-1 DCI detected by the UE in the PDCCH detection occasion m for the serving cell c.

In this implementation, the fourth variable may include $N_{m,c}^{\text{received,multi}}$, and the third calculation rule may be expressed as the above formula (7). In the above formula (7), $N_{m,c}^{\text{received,multi}}$ can be differently determined based on the following cases:

Case 2.1.1

When the application of spatial bundling is not configured, $N_{m,c}^{\text{received,multi}}$ is a total number of TBs actually scheduled for DCI that schedules more than one PDSCH and that is detected by the UE in the PDCCH monitoring occasion m for the serving cell c. For a single piece of DCI that schedules PDSCH(s), the number of TBs (1 or 2) carried by each valid PDSCH scheduled by the DCI can be determined based on whether the serving cell c is configured to allow dual codeword transmission and the TB disabling mode 1/2. The number of TBs actually scheduled for the DCI that schedules PDSCH(s) is the sum of the numbers of TBs carried by various valid PDSCH scheduled by the DCI.

Case 2.1.2

When the application of spatial bundling is configured, $N_{m,c}^{received,multi}$ is a total number of valid PDSCHs scheduled by DCI that schedules more than one PDSCH and that is detected by the UE in the PDCCH monitoring occasion m for the serving cell c.

In an implementation, when the terminal is only allowed to monitor, for a single serving cell in the PDCCH monitoring occasion m, a single piece of DCI that schedules PDSCH(s), a number of TBs (when the application of spatial bundling is not configured) that are actually scheduled or a number of valid PDSCHs (when the application of spatial bundling is configured) scheduled for a single piece of detected DCI that schedules PDSCH(s) is used as $N_{m,c}^{received,multi}$. When the terminal is allowed to monitor, for a single serving cell in the PDCCH monitoring occasion m, more than one piece of DCI that schedules PDSCH(s), numbers of TBs (when the application of spatial bundling is configured) that are actually scheduled or numbers of valid PDSCHs (when the application of spatial bundling is not configured) scheduled for various pieces of detected DCI that schedule the PDSCH are added as $N_{m,c}^{\overline{received},multi}$.

Case 2.2

The HARQ-ACK obtained after the HARQ-ACK corresponding to the DCI that schedules more than one PDSCH is subject to time domain bundling is involved or placed in the second Sub-codebook.

Optionally, in a case that the second sub-codebook includes the target HARQ-ACK, the terminal determines the second parameter according to the following formula (8):

$$
n_{HARQ\text{-}ACK,second} = \left( \left( V_{DAI,m_{last}}^{DL} - \sum_{c=0}^{N_{cells}^{DL,multi}-1} U_{DAI,c}^{multi} \right) mod(T_D) \right) N_{HARQ-ACK,max}^{TBG,max} + \sum_{c=0}^{N_{cells}^{DL,multi}-1} \sum_{m=0}^{M-1} N_{m,c}^{received,multi}
$$

$N_{cells}^{DL,multi}$ indicates a number of multi-feedback cells in the PUCCH cell group, a multi-feedback cell is a type-1 cell or a type-2 cell, the type-1 cell is a serving cell configured with multi-PDSCH scheduling and not configured with time domain bundling (that is, not configured with a parameter of numberOIHARQ-BundlingGroups), and the type-2 cell is a serving cell configured with multi-PDSCH scheduling and configured with time domain bundling and a number of configured bundling groups is greater than 1. $N_{cells}^{DL,TBG}$ is equal to $N_{cells}^{DL,multi}$.

For a first cell c, a corresponding first maximum value is calculated based on $N_{TB,c}^{DL} \cdot N_{PDSCH,c}^{max}$, and $N_{PDSCH,c}^{max}$ is a maximum number of PDSCH receptions that can be scheduled by a single piece of type-1 DCI corresponding to the first cell c; and the first cell is any one multi-feedback cell that is a type-1 cell, from the $N_{cells}^{DL,TBG}$ multi-feedback cells;

For a second cell c, a corresponding first maximum value is calculated based on $N_{TB,c}^{DL} \cdot N_{HARQ-ACK,c}^{TBG,max}$, $N_{HARQ-ACK,c}^{TBG,max}$ is a number of bundling groups configured for the second cell c; and the second cell is any one multi-feedback cell that is the type-2 cell, from the $N_{cells}^{DL,TBG}$ multi-feedback cells. $N_{HARQ-ACK,max}^{TBG,max}$ is a maximum value of first maximum values that are obtained by traversing the $N_{cells}^{DL,TBG}$ multi-feedback cells and that correspond to the multi-feedback cells.

In this implementation, the fourth variable may include $N_{m,c}^{received,multi}$, and the third calculation rule may be expressed as the above formula (8).

In the above formula (8), the meaning and value of $N_{m,c}^{received,multi}$ can be differently determined according to the following cases:

Case 2.2.1

When the application of spatial bundling is not configured, $N_{m,c}^{received,multi}$ is a total number of bundling groups actually scheduled for each TB by DCI that schedules more than one PDSCH and that is detected by the UE in the PDCCH monitoring occasion m for the serving cell c. For a single piece of DCI that schedules PDSCH(s), the bundling group actually scheduled for a TB (the first TB or the second TB when the serving cell c is configured with dual codeword transmission, and only the first TB when the serving cell c is not configured with dual codeword transmission) can be understood as: when a bundling group contains at least one valid PDSCH and at least one valid PDSCH enables the TB, the bundling group is considered to be actually scheduled. Based on whether the serving cell c is configured to allow dual codeword transmission and the division method of the applied bundling group, the number of bundling groups actually scheduled for a TB by a single piece of DCI that schedules PDSCH(s) can be determined. When the serving cell c is configured with dual codeword transmission, the number of bundling groups actually scheduled for a TB by a single piece of DCI that schedules PDSCH(s) is the sum of the numbers of bundling groups actually scheduled for the two TBs. When the serving cell c is not configured with dual codeword transmission, the number of bundling groups actually scheduled for a TB by a single piece of DCI that schedules PDSCH(s) is the number of bundling groups actually scheduled for the first TB.

Case 2.2.2

When the application of spatial bundling is configured, $N_{m,c}^{received,multi}$ is a total number of bundling groups (Bundling group) actually scheduled by DCI that schedules more than one PDSCH and that is detected by the UE in the PDCCH monitoring occasion m for the serving cell c. For a single piece of DCI that schedules PDSCH(s), the actually scheduled bundling group can be understood as: when a bundling group contains at least one valid PDSCH, the bundling group is considered to be actually scheduled.

Case 2.2.3

When the terminal is only allowed to monitor, for a single serving cell in the PDCCH monitoring occasion m, a single piece of DCI that schedules PDSCH(s), a number of bundling groups (when the application of spatial bundling is not configured) that are actually scheduled or a number of bundling groups (when the application of spatial bundling is configured) actually scheduled for each TB by a single piece of detected DCI DCI that schedules PDSCH(s) is used as $N_{m,c}^{received,multi}$. When the terminal is allowed to monitor, for a single serving cell in the PDCCH monitoring occasion m, more than one piece of DCI that schedules PDSCH(s), numbers of bundling groups (when the application of spatial bundling is not configured) that are actually scheduled or numbers of bundling groups (when the application of spatial bundling is configured) actually scheduled for each TB by various pieces of detected DCI that schedule the PDSCH are added as $N_{m,c}^{received,multi}$.

In addition, in addition to the fourth variable, the meanings of other parameters in the above formula (8) are described as follows:

The meanings and values of $V_{DAI,m_{last}}^{DL}$ are different based on the following cases:

1) When $N_{cells}^{DL} = 1$, $V_{DAI,m_{last}}^{DL}$ is a value of a counter DAI carried in the last type-2 DCI detected by the UE in M PDCCH monitoring occasions for any serving cell.

2) When $N_{cells}^{DL} > 1$, $V_{DAI,m_{last}}^{DL}$ is a value of a total DAI carried in the last type-2 DCI detected by the UE in M PDCCH monitoring occasions for any serving cell.

3) When the UE detects, in M PDCCH monitoring occasions for any serving cell, no type-2 DCI, $V_{DAI,m_{last}}^{DL} = 0$.

The type-2 DCI herein needs to satisfy all the following features: (1) More than one PDSCH is scheduled. (2) The serving cell corresponding to the scheduled PDSCH is not configured with time domain bundling, or time domain bundling is configured and the number of configured bundling groups is greater than 1.

The meanings and values of $U_{DAI,c}^{multi}$ can be differently determined based on the following cases:

1) $U_{DAI,c}^{CBG}$ is a total number of pieces of type-2 DCI detected by the UE in PDCCH monitoring occasions for the serving cell c.

2) When the UE detects no type-2 DCI in M PDCCH monitoring occasions for the serving cell c, $U_{DAI,c}^{CBG} = 0$ .

$N_{cells}^{DL,multi}$ :

For case three, $N_{cells}^{DL,multi}$ is a number of serving cells configured with multi-PDSCH scheduling and not configured with time domain bundling in the PUCCH cell group and serving cells configured with multi-PDSCH scheduling and configured with time domain bundling, where the number of configured bundling groups is greater than 1. In other words, $N_{cells}^{DL,multi}$ is the number of serving cells configured with multi-PDSCH scheduling in the PUCCH cell group. When a serving cell is configured with time domain bundling, the serving cell is included in $N_{cells}^{DL,multi}$ only when the number of configured bundling groups is greater than 1. It should be noted that the value of $N_{cells}^{DL,multi}$ here is the following $N_{cells}^{DL,TBG}$ .

Optionally, $N_{cells}^{DL,multi}$ is directly $N_{cells}^{DL}$ (the number of serving cells corresponding to the PUCCH cell group). In this case, for a serving cell not configured with multi-PDSCH scheduling, or for a serving cell configured multi-PDSCH scheduling and configured with time domain bundling, where the number of configured bundling groups is 1, correspondingly, $U_{DAI,c}^{multi} = 0$ .

$N_{HARQ-ACK,max}^{TBG,max}$ :

For the serving cell c in $N_{cells}^{DL,TBG}$ serving cells, when numberOfHARQ BundlingGroups is configured (that is, time domain bundling is configured), $N_{TB,c}^{DL} \cdot N_{HARQ-ACK,c}^{TBG,max}$ is used as a corresponding value. When numberOfHARQ BundlingGroups is not configured (that is, time domain bundling is not configured), $N_{TB,c}^{DL} \cdot N_{PDSCH,c}^{max}$ is used as a corresponding value. The $N_{cells}^{DL,TBG}$ serving cells are traversed to obtain the maximum value of values corresponding to the serving cells. $N_{HARQ-ACK,c}^{TBG,max}$ is the value of numberOfHARQ-BundlingGroups configured for the serving cell c, that is, the number of bundling groups configured when the serving cell c is configured with time domain bundling. $N_{TB,c}^{DL}$ :

When application of spatial bundling is not configured, $N_{TB,c}^{DL}$ is the value of maxNrofCodeWordsScheduledByDCI configured for the serving cell c. When application of spatial bundling is configured, $N_{TB,c}^{DL} = 1$ .

In conclusion, when the type-2 codebook contains two sub-codebooks, $n_{HARQ-ACK}$ may be calculated separately for the first sub-codebook and the second sub-codebook and then the sum of the two $n_{HARQ-ACK}$ is obtained.

That is, the determining, by the terminal, the first power control parameter according to the first sub-codebook and the second sub-codebook includes:

determining, by the terminal, a first parameter according to a second calculation rule corresponding to the first sub-codebook, and determining a second parameter according to a third calculation rule corresponding to the second sub-codebook; and
determining, by the terminal, that the first power control parameter is equal to a sum of the first parameter and the second parameter.

The process of determining the first parameter according to the second calculation rule corresponding to the first sub-codebook has the same meaning and determination process as the above $n_{HARQ-ACK,first}$, that is, the determining, by the terminal, the first parameter according to the second calculation rule corresponding to the first sub-codebook may include:

determining, by the terminal, a third variable according to the target information; and
determining, by the terminal, the first parameter based on the second calculation rule and the third variable.

In addition, the process of determining the second parameter according to the third calculation rule corresponding to the second sub-codebook has the same meaning and determination process as the above $n_{HARQ-ACK,second}$, that is, the determining, by the terminal, the second parameter according to the third calculation rule corresponding to the second sub-codebook includes:

> determining, by the terminal, a fourth variable according to the target information; and
> determining, by the terminal, the second parameter based on the third calculation rule and the fourth variable.

The process of determining the first parameter based on the second calculation rule and the third variable by the terminal and the process of determining the second parameter based on the third calculation rule and the fourth variable by the terminal are not described again herein.

Embodiment 3 Calculation of $n_{HARQ-ACK}$ of the enhanced type-2 codebook

The calculation of $n_{HARQ-ACK}$ corresponding to each PDSCH group related to the enhanced type-2 codebook can conform to the calculation of $n_{HARQ-ACK}$ of the type-2 codebook in the embodiments of the present application, and other rules can be similar to the corresponding rules in Rel-16 and are not repeated herein.

Embodiment 4 Calculation of $n_{HARQ-ACK}$ of the type-3 codebook

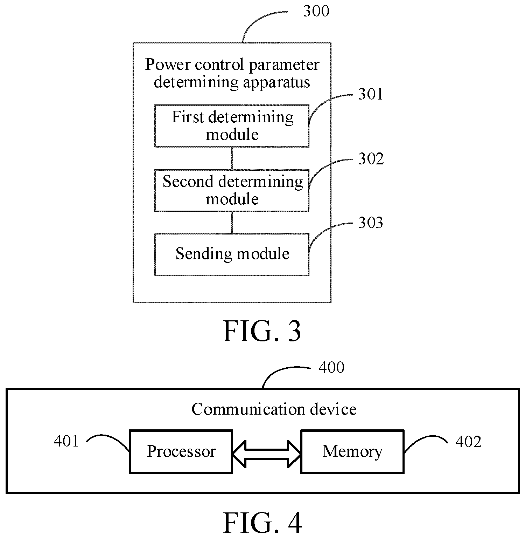

The Type-3 codebook (including the enhanced Type-3 codebook) is constructed based on the HARQ process and is not affected by whether multi-PDSCH scheduling and time domain bundling are configured.
In this embodiment of the present application, in a case that a serving cell of a terminal is configured with multi-physical downlink shared channel PDSCH scheduling, the terminal determines a first power control parameter according to target information related to the multi-PDSCH scheduling, where the first power control parameter includes a number of valid bits in a hybrid automatic repeat request acknowledgement HARQ-ACK. The terminal determines, according to the first power control parameter, a transmit power of a physical uplink control channel PUCCH that carries the HARQ-ACK. The terminal transmits the PUCCH to a network side device according to the transmit power. In this way, in the case that the serving cell of the terminal is configured with the multi-PDSCH scheduling, the first power control parameter can be determined according to the target information related to the multi-PDSCH scheduling, so that the first power control parameter matches the number of valid HARQ-ACK bits contained in the HARQ-ACK code, so that the value of the determined first power control parameter matches the actual multi-PDSCH scheduling transmission, and the transmit power that is determined according to the first power control parameter and that is of the PUCCH that carries the HARQ-ACK matches the transmit power actually required by the terminal, thereby ensuring the transmission performance of the PUCCH that carries the HARQ-ACK.
The power control parameter determining method provided by the embodiments of the present application may be performed by a power control parameter determining apparatus. In the embodiment of the present application, the power control parameter determining apparatus provided in the embodiments of the present application is described by taking the power control parameter determining method being performed by the power control parameter determining apparatus as an example.
Refer to FIG. 3. A power control parameter determining apparatus provided by an embodiment of the present application can be applied to a terminal. As shown in FIG. 3, the power control parameter determining apparatus 300 can include the following modules:

> a first determining module 301, configured to: in a case that a serving cell of a terminal is configured with multi-physical downlink shared channel PDSCH scheduling, determine a first power control parameter according to target information related to the multi-PDSCH scheduling, where the first power control parameter includes a number of valid bits in a hybrid automatic repeat request acknowledgement HARQ-ACK;
> a second determining module 302, configured to determine, according to the first power control parameter, a transmit power of a physical uplink control channel PUCCH that carries the HARQ-ACK; and
> a transmitting module 303, configured to transmit the PUCCH to a network side device according to the transmit power.

Optionally, the target information includes at least one of the following: first configuration information for time domain bundling transmission, second configuration information for spatial bundling transmission, a codebook used by the HARQ-ACK, and a sub-codebook used by the HARQ-ACK.
Optionally, in a case that the codebook used by the HARQ-ACK is a type-1 codebook, the first determining module 301 includes:

> a first determining unit, configured to determine at least one of a first variable and a second variable based on the target information; and
a second determining unit, configured to determine the first power control parameter according to at least one of the first variable and the second variable, and based on a first calculation rule corresponding to the type-1 codebook.

Optionally, in a case that it is configured that the HARQ-ACK is to be transmitted by using time domain bundling and not using spatial bundling, if the terminal receives PDSCH(s) within a first occasion, the first determining unit is specifically configured to:

determine that the first variable is equal to a number of TBs corresponding to target scheduled row(s);
where the target scheduled row(s) includes scheduled row(s) mapped to the first occasion, or the target scheduled row(s) includes scheduled row(s) determined according to a first PDSCH mapped to the first occasion based on an association with the last time domain resource allocation record, and the scheduled row(s) includes: row(s) actually scheduled or configured for the terminal from a time domain resource allocation TDRA table.

Optionally, the number of target scheduled rows is M, and in a case that M=0, the number of TBs corresponding to the target scheduled row is 0; or

in a case that M>0, the number of TBs corresponding to the target scheduled row is any one of the following:
a sum of numbers of TBs enabled for all the M target scheduled rows;
a number of TBs enabled for the M target scheduled rows;
a sum of numbers of TBs configured for all the M target scheduled rows; and
a number of TBs configured for the M target scheduled rows.

Optionally, in a case that the serving cell is not configured to allow dual codeword transmission, the number of TBs enabled for each of the target scheduled row(s) is equal to 1; or
in a case that the serving cell is configured to allow dual codeword transmission, the number of TBs enabled for the target scheduled row is equal to any one of the following:

in a case that a first TB disabling mode is used, a number of TBs that are uniformly enabled by a piece of downlink control information DCI corresponding to the target scheduled row, and
in a case that a second TB disabling mode is used, a number of TBs that are actually enabled by a piece of DCI corresponding to the target scheduled row.

Optionally, the number of TBs enabled for the M target scheduled row(s) includes:

a maximum value of numbers of TBs enabled for the M target scheduled row(s); and
a number of enabled TBs determined according to the M target scheduled row(s).

Optionally, in a case that the serving cell is not configured to allow dual codeword transmission, the number of TBs configured for each of the target scheduled row(s) is equal to 1; or
in a case that the serving cell is configured to allow dual codeword transmission, the number of TBs configured for each of the target scheduled row(s) is equal to 2.
Optionally, in a case that a PDSCH corresponding to the last time domain resource allocation record of any scheduled row is required to be a valid PDSCH, the first determining unit includes:

a first determining subunit, configured to: if the first PDSCH exists and the first PDSCH is associated with or corresponds to the last time domain resource allocation record of the target scheduled row, determine that the target number of TBs is equal to a number of TBs enabled or configured for the first PDSCH; and
a second determining subunit, configured to: if the first PDSCH does not exist or the first PDSCH is not associated with or does not correspond to the last time domain resource allocation record of any target scheduled row, determine that the first variable is 0.

Optionally, in a case that the codebook used by the HARQ-ACK is a type-1 codebook, and it is configured that the type-1 codebook is to be transmitted by using time domain bundling and using spatial bundling, if the terminal receives PDSCH(s) within a first occasion, the first determining unit is specifically configured to:

determine that the first variable is equal to a number of target scheduled row(s);
where the target scheduled row(s) includes scheduled row(s) mapped to the first occasion, or the target scheduled

row(s) includes scheduled row(s) determined according to a first PDSCH mapped to the first occasion based on an association with the last time domain resource allocation record, and the scheduled row(s) includes: row(s) actually scheduled or configured for the terminal from a TDRA table.

Optionally, in a case that a PDSCH corresponding to the last time domain resource allocation record of any scheduled row is required to be a valid PDSCH, the first determining unit is specifically configured to perform any one of the following:

if the first PDSCH exists and the first PDSCH is associated with or corresponds to the last time domain resource allocation record of any of the target scheduled row(s), determine that the number of the target scheduled row(s) is 1; and
if the first PDSCH does not exist or the first PDSCH is not associated with or does not correspond to the last time domain resource allocation record of any of the target scheduled row(s), determine that the number of the target scheduled row(s) is 0.

Optionally, in a case that the codebook used by the HARQ-ACK is a type-1 codebook, the first determining unit is further configured to:
determine that the second variable is equal to 0.
Optionally, in a case that the codebook used by the HARQ-ACK is a type-2 codebook, the first determining module 301 includes:

a third determining unit, configured to: in a case that no cell in the PUCCH cell group is configured with time domain bundling, determine the first power control parameter according to a first sub-codebook and a second sub-codebook, where the PUCCH cell group includes serving cell(s) of the terminal, the first sub-codebook corresponds to a granularity of single HARQ-ACK unit, and the second sub-codebook corresponds to a granularity of multiple HARQ-ACK units;
a fourth determining unit, configured to: in a case that cells configured with multi-PDSCH scheduling in the PUCCH cell group are all configured with time domain bundling, and a number of configured bundling groups is equal to 1, determine the first power control parameter according to the first sub-codebook; and
a fifth determining unit, configured to: in a case that at least one of cells configured with multi-PDSCH scheduling in the PUCCH cell group is configured with time domain bundling, and a number of configured bundling groups is great than 1, determine the first power control parameter according to the first sub-codebook and the second sub-codebook.

Optionally, the third determining unit and/or the fifth determining unit includes:

a third determining subunit, configured to determine a first parameter according to a second calculation rule corresponding to the first sub-codebook, and determine a second parameter according to a third calculation rule corresponding to the second sub-codebook; and
a fourth determining subunit, configured to determine that the first power control parameter is equal to a sum of the first parameter and the second parameter.

Optionally, the fourth determining unit includes:

a fifth determining subunit, configured to determine the third variable according to the target information; and
a sixth determining subunit, configured to determine the first power control parameter based on the second calculation rule and the third variable.

Optionally, the third determining subunit includes:

a first determining secondary unit, configured to determine the third variable according to the target information; and
a second determining secondary unit, configured to determine the first parameter based on the second calculation rule and the third variable;
and/or
the third determining subunit also includes:

a third determining secondary unit, configured to determine the fourth variable according to the target information; and

a fourth determining secondary unit, configured to determine the second parameter based on the third calculation rule and the fourth variable.

Optionally, in a case that the terminal detects, in a second occasion, DCI that schedules PDSCH(s) and the terminal is not configured to apply spatial bundling, the fifth determining subunit and/or the first determining secondary unit is specifically configured to:
determine that the third variable is equal to a number of TBs actually enabled by or configured for the DCI that schedules PDSCH(s) detected by the terminal in the second occasion.

Optionally, in a case that the serving cell is not configured to allow dual codeword transmission, the number of TBs actually enabled by or configured for each piece of DCI that schedules PDSCH(s) is equal to 1; or
in a case that the serving cell is configured to allow dual codeword transmission, the number of TBs configured for each piece of DCI that schedules PDSCH(s) is equal to 2, or the number of TBs actually enabled by each piece of DCI that schedules PDSCH(s) is any one of the following:

in a case that the first TB disabling mode is used, a number of TBs that are uniformly enabled by each piece of DCI that schedules PDSCH(s); and
in a case that the second TB disabling mode is used, a number of TBs that are actually enabled by each piece of DCI that schedules PDSCH(s).

Optionally, the fifth determining subunit and/or the first determining secondary unit is specifically configured to:

in a case that the terminal is allowed to detect, for a single serving cell in the second occasion, only a single piece of DCI that schedules PDSCH(s), determine that the third variable is equal to a number of TBs that are actually enabled or configured by the single piece of DCI that schedules PDSCH(s) and that is detected by the terminal; or
in a case that the terminal is allowed to detect, for a single serving cell in the second occasion, at least two pieces of DCI that schedules PDSCH(s), determine that the third variable is equal to a sum of numbers of TBs that are actually enabled or configured by all pieces of DCI that schedule the PDSCH and are detected by the terminal.

Optionally, in a case that the terminal detects, in a second occasion, DCI that schedules PDSCH(s) and is configured to apply spatial bundling, the fifth determining subunit and/or the first determining secondary unit is specifically configured to:
determine that the third variable is equal to a number of pieces of DCI that schedule the PDSCH and are detected by the terminal in the second occasion.

Optionally, the third determining subunit is specifically configured to:
in a case that the second sub-codebook does not include a target HARQ-ACK and the target HARQ-ACK includes a HARQ-ACK obtained by performing time domain bundling on the first HARQ-ACK, determine, by the terminal, the second parameter according to the following formula:

$$n_{\text{HARQ-ACK,second}} = \left( \left( V_{\text{DAI,m}_{\text{last}}}^{\text{DL}} - \sum_{c=0}^{N_{\text{cells}}^{\text{DL,multi}}-1} U_{\text{DAI,c}}^{\text{multi}} \right) \bmod(T_{\text{D}}) \right) N_{\text{HARQ-ACK}}^{\max} + \sum_{c=0}^{N_{\text{cells}}^{\text{DL,multi}}-1} \sum_{m=0}^{M-1} N_{\text{m,c}}^{\text{received,multi}}$$

The first HARQ-ACK is a HARQ-ACK corresponding to piece(s) of DCI each of which is used to schedule at least two PDSCHs, and $n_{\text{HARQ-ACK,second}}$ indicates the second parameter determined according to the third calculation rule corresponding to the second sub-codebook. $T_{\text{D}}=2^{N_{\text{C-DAI}}^{\text{DL}}}$, and $N_{\text{C-DAI}}^{\text{DL}}$ indicates a number of bits occupied by a counter downlink assignment index DAI. $N_{\text{cells}}^{\text{DL,multi}}$ indicates a number of serving cells configured with multi-PDSCH scheduling in the PUCCH cell group.

When $N_{\text{cells}}^{\text{DL,multi}} = 1$, $V_{\text{DAI,m}_{\text{last}}}^{\text{DL}}$ indicates a value of a counter DAI carried by the last piece of type-1 DCI for any serving cell that the terminal detects in M PDCCH monitoring occasions, and the type-1 DCI includes DCI each piece of which is used to schedule more than one PDSCH.

When $N_{\text{cells}}^{\text{DL,multi}} > 1$, $V_{\text{DAI,m}_{\text{last}}}^{\text{DL}}$ indicates a value of a total DAI carried by the last piece of type-1 DCI for any serving cell that the terminal detects in M PDCCH monitoring occasions.

When the terminal detects no type-1 DCI in the M PDCCH monitoring occasions for any serving cell, $V_{DAI,m_{last}}^{DL} = \overline{0}$. $U_{DAI,c}^{multi}$ indicates a total number of pieces of type-1 DCI detected by the terminal in M PDCCH monitoring occasions for a serving cell c. $N_{HARQ-ACK}^{max}$ indicates a maximum value of $N_{TB,c}^{DL} \cdot N_{PDSCH,c}^{max}$ obtained by traversing $N_{cells}^{DL}$ serving cells. $N_{PDSCH,c}^{max}$ is a maximum number of PDSCH receptions that can be scheduled by a single piece of type-1 DCI for the serving cell c.

When application of spatial bundling is not configured, $N_{TB,c}^{DL}$ is a maximum number of codewords that can be scheduled by DCI and are configured for the serving cell c; when application of spatial bundling is configured, $N_{TB,c}^{DL} = 1$.

If spatial bundling is not configured, $N_{m,c}^{received,multi}$ is a total number of transport blocks actually scheduled by all pieces of type-1 DCI detected by the UE in the PDCCH detection occasion m for the serving cell c; and if spatial bundling is configured, $N_{m,c}^{received,multi}$ is a total number of valid PDSCHs scheduled by all pieces of type-1 DCI detected by the UE in the PDCCH detection occasion m for the serving cell c;
and/or
in a case that the second sub-codebook includes the target HARQ-ACK, determining, by the terminal, the second parameter according to the following formula:

$$n_{HARQ-ACK,second} = \left(\left(V_{DAI,m_{last}}^{DL} - \sum_{c=0}^{N_{cells}^{DL,multi}-1} U_{DAI,c}^{multi}\right) \mod(T_D)\right) N_{HARQ-ACK,max}^{TBG,max} + \sum_{c=0}^{N_{cells}^{DL,multi}-1} \sum_{m=0}^{M-1} N_{m,c}^{received,multi}$$

$N_{cells}^{DL,multi}$ indicates a number of multi-feedback cells in the PUCCH cell group, a multi-feedback cell is a type-1 cell or a type-2 cell, the type-1 cell is a serving cell configured with multi-PDSCH scheduling and not configured with time domain bundling, and the type-2 cell is a serving cell configured with multi-PDSCH scheduling and configured with time domain bundling and a number of configured bundling groups is greater than 1. $N_{cells}^{DL,TBG}$ is equal to $N_{cells}^{DL,multi}$.

For a first cell c, a corresponding first maximum value is calculated based on $N_{TB,c}^{DL} \cdot N_{PDSCH,c}^{max}$, and $N_{PDSCH,c}^{max}$ is a maximum number of PDSCH receptions that can be scheduled by a single piece of type-1 DCI corresponding to the first cell c; and the first cell is any one multi-feedback cell that is the type-1 cell, from the $N_{cells}^{DL,TBG}$ multi-feedback cells.

For a second cell c, a corresponding first maximum value is calculated based on $N_{TB,c}^{DL} \cdot N_{HARQ-ACK,c}^{TBG,max}$, and $N_{HARQ-ACK,c}^{TBG,max}$ is a number of bundling groups configured for the second cell c; the second cell is any one multi-feedback cell that is the type-2 cell, from the $N_{cells}^{DL,TBG}$ multi-feedback cells. $N_{HARQ-ACK,max}^{TBG,max}$ is a maximum value of first maximum values that are obtained by traversing the $N_{cells}^{DL,TBG}$ multi-feedback cells and that correspond to the multi-feedback cells.

The power control parameter determining apparatus 300 provided by the embodiments of the present application can perform each process in the power control parameter determining method shown in FIG. 2, and can achieve the same beneficial effects. To avoid repetition, details are not described again.

The power control parameter determining apparatus 300 in the embodiments of the present application may be an electronic device, such as an electronic device with an operating system, or may be a component in the electronic device, such as an integrated circuit or a chip. The electronic device may be a terminal or other devices other than the terminal. For example, the terminal may include but is not limited to the types of terminals 11 listed above, and other devices may be servers, network attached storage (Network Attached Storage, NAS), or the like, which are not specifically limited in the embodiments of the present application.

Optionally, as shown in FIG. 4, an embodiment of the present application further provides a communication device 400, including a processor 401 and a memory 402. The memory 402 stores a program or an instruction executable on the processor 401. For example, when the communication device 400 is a terminal, the program or the instruction implements each process of the embodiment of the foregoing power control parameter determining method when being executed by the processor 401, and the same technical effect can be achieved. When the communication device 400 is a network side device, the program or the instruction implements each process of the embodiment of the foregoing power control parameter determining method when being executed by the processor 401, and the same technical effect can be achieved.

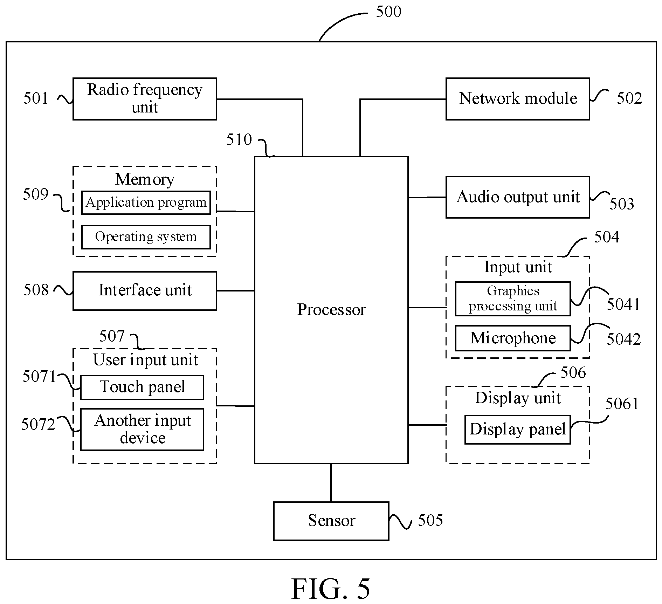

The embodiments of the present application further provide a terminal, including a processor and a communication interface. The processor is configured to: in a case that a serving cell of a terminal is configured with multi-physical downlink shared channel PDSCH scheduling, determine a first power control parameter according to target information related to the multi-PDSCH scheduling, where the first power control parameter includes a number of valid bits in a hybrid automatic repeat request acknowledgement HARQ-ACK; and determine, according to the first power control parameter, a transmit power of a physical uplink control channel PUCCH that carries the HARQ-ACK. The communication interface is configured to transmit the PUCCH to a network side device according to the transmit power. This terminal embodiment corresponds to the above-mentioned method embodiment on the terminal side, and each implementation process and implementation manner of the above-mentioned method embodiment can be applied to this terminal embodiment, and can achieve the same technical effect. Specifically, FIG. 5 is a schematic structural diagram of hardware of a terminal provided in an embodiment of the present application.

The terminal 500 includes but is not limited to: at least some of a radio frequency unit 501, a network module 502, an audio output unit 503, an input unit 504, a sensor 505, a display unit 506, a user input unit 507, an interface unit 508, a memory 509, and a processor 510.

Those skilled in the art can understand that the terminal 500 may further include the power supply (for example, a battery) supplying power to each component. Preferably, the power supply may be logically connected to the processor 510 by using a power management system, so as to implement functions such as charging management, discharging management and power consumption management by using the power management system. The terminal structure shown in FIG. 5 does not constitute any limitation on the terminal, and the terminal may include more or fewer components than those shown in the figure, or combine some components, or have different component arrangements. Details are not described herein.

It should be understood that in the embodiments of the present application, the input unit 504 may include a graphics processing unit (Graphics Processing Unit, GPU) 5041 and a microphone 5042, and the graphics processing unit 5041 processes image data of a still picture or video obtained by an image capture apparatus (such as a camera) in a video capture mode or an image capture mode. The display unit 506 may include a display panel 5061, and the display panel 5061 may be configured in a form of a liquid crystal display, an organic light-emitting diode or the like. Specifically, the user input unit 507 includes at least one of a touch panel 5071 and another input device 5072. The touch panel 5071 is also called a touch screen The touch panel 5071 may include two parts: a touch detection apparatus and a touch controller. The another input device 5072 may include, but is not limited to, a physical keyboard, function keys (such as a volume control key and a switch key), a trackball, a mouse, and a joystick. Details are not described herein.

In the embodiments of the present application, after receiving downlink data from the network side device, the radio frequency unit 501 can transmit the data to the processor 510 for processing. In addition, the radio frequency unit 501 can transmit uplink data to the network side device. Generally, the radio frequency unit 501 includes, but is not limited to, an antenna, an amplifier, a transceiver, a coupler, a low noise amplifier, a duplexer, and the like.

The memory 509 may be configured to store software programs and various pieces of data. The memory 509 may mainly include a first storage area storing a program or an instruction and a second storage area storing data, where the first storage area may store an operating system, an application program or instructions required by at least one function (such as a sound playback function, an image playback function, etc.) and the like. Besides, the memory 509 may be a volatile memory or a non-volatile memory, or may include both a volatile memory and a non-volatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 509 described in the embodiments of the present application is intended to include but is not limited to these and any other suitable types of memories.

The processor 510 may include one or more processing units. Optionally, the processor 510 may integrate an application processor and a modem processor, where the application processor mainly processes an operating system, a user interface, an application program, and the like, and the modem processor mainly processes wireless communication signals, such as a baseband processor. It can be understood that, the modem processor may not be integrated into the processor 510.

The processor 510 is configured to: in a case that a serving cell of the terminal 500 is configured with multi-physical downlink shared channel PDSCH scheduling, determine a first power control parameter according to target information related to the multi-PDSCH scheduling, where the first power control parameter includes a number of valid bits in a hybrid automatic repeat request acknowledgement HARQ-ACK.

The processor 510 is further configured to determine, according to the first power control parameter, a transmit power of a physical uplink control channel PUCCH that carries the HARQ-ACK; and

The radio frequency unit 501 is configured to transmit the PUCCH to the network side device according to the transmit power.

Optionally, the target information includes at least one of the following: first configuration information for time domain bundling transmission, second configuration information for spatial bundling transmission, a codebook used by the HARQ-ACK, and a sub-codebook used by the HARQ-ACK.

Optionally, in a case that the codebook used by the HARQ-ACK is a type-1 codebook, the determining, by the processor 510, a first power control parameter according to target information related to the multi-PDSCH scheduling includes:

The processor 510 determines at least one of a first variable and a second variable based on the target information.

The processor 510 determines the first power control parameter according to at least one of the first variable and the second variable, and based on a first calculation rule corresponding to the type-1 codebook.

Optionally, in a case that it is configured that the HARQ-ACK is to be transmitted by using time domain bundling and not using spatial bundling, if the terminal receives PDSCH(s) within a first occasion, the determining, by the processor 510, a first variable according to the target information includes:

determining, by the processor 510, that the first variable is equal to a number of TBs corresponding to target scheduled row(s),

where the target scheduled row(s) includes scheduled row(s) mapped to the first occasion, or the target scheduled row(s) includes scheduled row(s) determined according to a first PDSCH mapped to the first occasion based on an association with the last time domain resource allocation record, and the scheduled row(s) includes: row(s) actually scheduled or configured for the terminal from a time domain resource allocation TDRA table.

Optionally, the number of target scheduled rows is M, and in a case that M=0, the number of TBs corresponding to the target scheduled row is 0; or

in a case that M>0, the number of TBs corresponding to the target scheduled row is any one of the following:

a sum of numbers of TBs enabled for all the M target scheduled rows;
a number of TBs enabled for the M target scheduled rows;
a sum of numbers of TBs configured for all the M target scheduled rows; and
a number of TBs configured for the M target scheduled rows.

Optionally, in a case that the serving cell is not configured to allow dual codeword transmission, the number of TBs enabled for each of the target scheduled row(s) is equal to 1; or

in a case that the serving cell is configured to allow dual codeword transmission, the number of TBs enabled for the target scheduled row is equal to any one of the following:
in a case that a first TB disabling mode is used, a number of TBs that are uniformly enabled by a piece of downlink control information DCI corresponding to the target scheduled row, and
in a case that a second TB disabling mode is used, a number of TBs that are actually enabled by a piece of DCI corresponding to the target scheduled row.

Optionally, the number of TBs enabled for the M target scheduled row(s) includes:

a maximum value of numbers of TBs enabled for the M target scheduled row(s); and
a number of enabled TBs determined according to the M target scheduled row(s).

Optionally, in a case that the serving cell is not configured to allow dual codeword transmission, the number of TBs configured for each of the target scheduled row(s) is equal to 1; or
in a case that the serving cell is configured to allow dual codeword transmission, the number of TBs configured for each of the target scheduled row(s) is equal to 2.

Optionally, in a case that a PDSCH corresponding to the last time domain resource allocation record of any scheduled row is required to be a valid PDSCH, the determining, by the processor 510, that the first variable is equal to the number of TBs corresponding to the target scheduled row(s) includes:

if the first PDSCH exists and the first PDSCH is associated with or corresponds to the last time domain resource allocation record of any of the target scheduled row(s), determining, by the processor 510, that the target number of TBs is equal to a number of TBs enabled or configured for the first PDSCH; and
if the first PDSCH does not exist or the first PDSCH is not associated with or does not correspond to the last time domain resource allocation record of any of the target scheduled row(s), determining, by the processor 510, that the first variable is 0.

Optionally, in a case that the codebook used by the HARQ-ACK is a type-1 codebook, and it is configured that the type-1 codebook is to be transmitted by using time domain bundling and using spatial bundling, if the terminal receives PDSCH(s) within a first occasion, the determining, by the processor 510, a first variable according to the target information includes:

determining, by the processor 510, that the first variable is equal to a number of target scheduled row(s);
where the target scheduled row(s) includes scheduled row(s) mapped to the first occasion, or the target scheduled row(s) includes scheduled row(s) determined according to a first PDSCH mapped to the first occasion based on an association with the last time domain resource allocation record, and the scheduled row(s) includes: row(s) actually scheduled or configured for the terminal from a TDRA table.

Optionally, in a case that a PDSCH corresponding to the last time domain resource allocation record of any scheduled row is required to be a valid PDSCH, the determining, by the processor 510, that the first variable is equal to the number of target scheduled row(s) includes any one of the following:

if the first PDSCH exists and the first PDSCH is associated with or corresponds to the last time domain resource allocation record of any of the target scheduled row(s), determining, by the processor 510, that the number of the target scheduled row(s) is 1; and
if the first PDSCH does not exist or the first PDSCH is not associated with or does not correspond to the last time domain resource allocation record of any of the target scheduled row(s), determining, by the processor 510, that the number of the target scheduled row(s) is 0.

Optionally, in a case that the codebook used by the HARQ-ACK is a type-1 codebook, the determining, by the processor 510, a second variable according to the target information includes:
determining, by the processor 510, that the second variable is equal to 0.
Optionally, in a case that the codebook used by the HARQ-ACK is a type-2 codebook, the determining, by the processor 510, a first power control parameter according to target information related to the multi-PDSCH scheduling includes:

in a case that no cell in the PUCCH cell group is configured with time domain bundling, determining, by the processor 510, the first power control parameter according to a first sub-codebook and a second sub-codebook, where the PUCCH cell group includes serving cell(s) of the terminal, the first sub-codebook corresponds to a granularity of single HARQ-ACK unit, and the second sub-codebook corresponds to a granularity of multiple HARQ-ACK units;
in a case that cells configured with multi-PDSCH scheduling in the PUCCH cell group are all configured with time domain bundling, and a number of configured bundling groups is equal to 1, determining, by the processor 510, the first power control parameter according to the first sub-codebook; and
in a case that at least one of cells configured with multi-PDSCH scheduling in the PUCCH cell group is configured with time domain bundling, and a number of configured bundling groups is great than 1, determining, by the processor 510, the first power control parameter according to the first sub-codebook and the second sub-codebook.

Optionally, the determining, by the processor 510, the first power control parameter according to the first sub-codebook and the second sub-codebook includes:

determining, by the processor 510, a first parameter according to a second calculation rule corresponding to the first sub-codebook, and determining a second parameter according to a third calculation rule corresponding to the second sub-codebook; and
determining, by the processor 510, that the first power control parameter is equal to a sum of the first parameter and the second parameter.

Optionally, the determining, by the processor 510, the first power control parameter according to the first sub-codebook includes:

determining, by the processor 510, a third variable according to the target information; and
determining, by the processor 510, the first power control parameter based on the second calculation rule and the third variable.

Optionally, the determining, by the processor 510, a first parameter according to a second calculation rule corresponding to the first sub-codebook includes:

determining, by the processor 510, a third variable according to the target information; and
determining, by the processor 510, the first parameter based on the second calculation rule and the third variable; and/or
the determining, by the processor 510, a second parameter according to a third calculation rule corresponding to the second sub-codebook includes:

determining, by the processor 510, a fourth variable according to the target information; and
determining, by the processor 510, the second parameter based on the third calculation rule and the fourth variable.

Optionally, in a case that the terminal 500 detects, in a second occasion, DCI that schedules PDSCH(s) and the terminal is not configured to apply spatial bundling, the determining, by the processor 510, a third variable based on the target information includes:
determining, by the processor 510, that the third variable is equal to a number of TBs actually enabled by or configured for the DCI that schedules PDSCH(s) detected by the terminal in the second occasion.

Optionally, in a case that the serving cell is not configured to allow dual codeword transmission, the number of TBs actually enabled by or configured for each piece of DCI that schedules PDSCH(s) is equal to 1; or
in a case that the serving cell is configured to allow dual codeword transmission, the number of TBs configured for each piece of DCI that schedules PDSCH(s) is equal to 2, or the number of TBs actually enabled by each piece of DCI that schedules PDSCH(s) is any one of the following:

in a case that the first TB disabling mode is used, a number of TBs that are uniformly enabled by each piece of DCI that schedules PDSCH(s); and
in a case that the second TB disabling mode is used, a number of TBs that are actually enabled by each piece of DCI that schedules PDSCH(s).

Optionally, the determining, by the processor 510, the third variable according to the target information includes:

in a case that the terminal is allowed to detect, for a single serving cell in the second occasion, only a single piece of DCI that schedules PDSCH(s), determining, by the processor 510, that the third variable is equal to a number of TBs that are actually enabled or configured by the single piece of DCI that schedules PDSCH(s) and that is detected by the terminal; or
in a case that the terminal is allowed to detect, for a single serving cell in the second occasion, at least two pieces of DCI that schedules PDSCH(s), determining, by the processor 510, that the third variable is equal to a sum of numbers of TBs that are actually enabled or configured by all pieces of DCI that schedule the PDSCH and are detected by the terminal.

Optionally, in a case that the terminal 500 detects, in a second occasion, DCI that schedules PDSCH(s) and is configured to apply spatial bundling, the determining, by the processor 510, a third variable based on the target information includes:
determining, by the processor 510, that the third variable is equal to the number of PDSCH scheduled DCIs detected by the terminal in the second occasion.

Optionally, the determining, by the processor 510, a second parameter according to a third calculation rule corresponding to the second sub-codebook includes:
in a case that the second sub-codebook does not include a target HARQ-ACK and the target HARQ-ACK includes a HARQ-ACK obtained by performing time domain bundling on the first HARQ-ACK, determining, by the processor 510, the second parameter according to the following formula:

$$n_{\text{HARQ-ACK,second}} = \left( \left( \left( V_{\text{DAI},m_{\text{last}}}^{\text{DL}} - \sum_{c=0}^{N_{\text{cells}}^{\text{DL,multi}}-1} U_{\text{DAI,c}}^{\text{multi}} \right) \bmod(T_D) \right) N_{\text{HARQ-ACK}}^{\max} + \sum_{c=0}^{N_{\text{cells}}^{\text{DL,multi}}-1} \sum_{m=0}^{M-1} N_{m,c}^{\text{received,multi}} \right)$$

The first HARQ-ACK is a HARQ-ACK corresponding to piece(s) of DCI each of which is used to schedule at least two PDSCHs, and $n_{\text{HARQ-ACK,second}}$ indicates the second parameter determined according to the third calculation rule corresponding to the second sub-codebook. $T_D = 2^{N_{\text{C-DAI}}^{\text{DL}}}$, and $N_{\text{C-DAI}}^{\text{DL}}$ indicates a number of bits occupied by a counter downlink assignment index DAI. $N_{\text{cells}}^{\text{DL,multi}}$ indicates a number of serving cells configured with multi-PDSCH scheduling in the PUCCH cell group.

When $N_{\text{cells}}^{\text{DL,multi}} = 1$, $V_{\text{DAI},m_{\text{last}}}^{\text{DL}}$ indicates a value of a counter DAI carried by the last piece of type-1 DCI for any serving cell that the terminal detects in M PDCCH monitoring occasions, and the type-1 DCI includes DCI each piece of which is used to schedule more than one PDSCH.

When $N_{\text{cells}}^{\text{DL,multi}} > 1$, $V_{\text{DAI},m_{\text{last}}}^{\text{DL}}$ indicates a value of a total DAI carried by the last piece of type-1 DCI for any serving cell that the terminal detects in M PDCCH monitoring occasions.

When the terminal detects no type-1 DCI in the M PDCCH monitoring occasions for any serving cell, $V_{\text{DAI},m_{\text{last}}}^{\text{DL}} = 0$. $U_{\text{DAI,c}}^{\text{multi}}$ indicates a total number of pieces of type-1 DCI detected by the terminal in M PDCCH monitoring occasions for a serving cell c. $N_{\text{HARQ-ACK}}^{\max}$ indicates a maximum value of $N_{\text{TB,c}}^{\text{DL}} \cdot N_{\text{PDSCH,c}}^{\max}$ obtained by traversing $N_{\text{cells}}^{\text{DL}}$ serving cells. $N_{\text{PDSCH,c}}^{\max}$ is a maximum number of PDSCH receptions that can be scheduled by a single piece of type-1 DCI for the serving cell c.

When application of spatial bundling is not configured, $N_{\text{TB,c}}^{\text{DL}}$ is a maximum number of codewords that can be scheduled by DCI and are configured for the serving cell c; and when application of spatial bundling is configured, $N_{\text{TB,c}}^{\text{DL}} = 1$.

If spatial bundling is not configured, $N_{m,c}^{\text{received,multi}}$ is a total number of transport blocks actually scheduled by all pieces of type-1 DCI detected by the UE in the PDCCH detection occasion m for the serving cell c; and if spatial bundling is configured, $N_{m,c}^{\text{received,multi}}$ is a total number of valid PDSCHs scheduled by all pieces of type-1 DCI detected by the UE in the PDCCH detection occasion m for the serving cell c;
and/or
in a case that the second sub-codebook includes the target HARQ-ACK, determining, by the processor 510, the second parameter according to the following formula:

$$n_{\text{HARQ-ACK,second}} = \left( \left( \left( V_{\text{DAI},m_{\text{last}}}^{\text{DL}} - \sum_{c=0}^{N_{\text{cells}}^{\text{DL,multi}}-1} U_{\text{DAI,c}}^{\text{multi}} \right) \bmod(T_D) \right) N_{\text{HARQ-ACK,max}}^{\text{TBG,max}} + \sum_{c=0}^{N_{\text{cells}}^{\text{DL,multi}}-1} \sum_{m=0}^{M-1} N_{m,c}^{\text{received,multi}} \right)$$

$N_{\text{cells}}^{\text{DL,multi}}$ indicates a number of multi-feedback cells in the PUCCH cell group, a multi-feedback cell is a type-1 cell or a type-2 cell, the type-1 cell is a serving cell configured with multi-PDSCH scheduling and not configured with time domain bundling, and the type-2 cell is a serving cell configured with multi-PDSCH scheduling and configured with time domain bundling and a number of configured bundling groups is greater than 1. $N_{\text{cells}}^{\text{DL,TBG}}$ is equal to $N_{\text{cells}}^{\text{DL,multi}}$.

For a first cell c, a corresponding first maximum value is calculated based on $N_{TB,c}^{DL} \cdot N_{PDSCH,c}^{max}$ , and $N_{PDSCH,c}^{max}$ is a maximum number of PDSCH receptions that can be scheduled by a single piece of type-1 DCI corresponding to the first cell c; the first cell is any one multi-feedback cell that is the type-1 cell, from the $N_{cells}^{DL,TBG}$ multi-feedback cells.

For a second cell c, a corresponding first maximum value is calculated based on $N_{TB,c}^{DL} \cdot N_{HARQ-ACK,c}^{TBG,max}$ , and $N_{HARQ-ACK,c}^{TBG,max}$ is a number of bundling groups configured for the second cell c; and the second cell is any one multi-feedback cell that is the type-2 cell, from the $N_{cells}^{DL,TBG}$ multi-feedback cells. $N_{HARQ-ACK,max}^{TBG,max}$ is a maximum value of first maximum values that are obtained by traversing the $N_{cells}^{DL,TBG}$ multi-feedback cells and that correspond to the multi-feedback cells.

The terminal 500 provided by the embodiments of the present application can implement each process performed by the power control parameter determining apparatus 300 as shown in FIG. 3, and can achieve the same beneficial effects. To avoid repetition, details are not described again.

An embodiment of the present application further provides a readable storage medium. The readable storage medium stores a program or an instruction, and when the program or the instruction is executed by a processor, the various processes of the foregoing embodiment of the power control parameter determining method is performed and the same technical effects can be achieved. To avoid repetition, details are not described herein again.

The processor is a processor in the terminal in the above embodiments. The readable storage medium includes a computer-readable storage medium, such as a computer read-only memory ROM, a random access memory RAM, a magnetic disk, an optical disc, or the like.

An embodiment of the present application further provides a chip, the chip includes a processor and a communication interface, the communication interface is coupled to the processor, and the processor is configured to run programs or instructions to implement each process of the embodiment of the foregoing power control parameter determining method and the same technical effects can be achieved. To avoid repetition, details are not described herein again.

It should be understood that the chips mentioned in the embodiments of the present application may also be called a system-level chip, a system chip, a chip system, or a system-on-chip.

The embodiments of the present application further provide a computer program/program product, the computer program/program product is stored in a storage medium, and the computer program/program product is executed by at least one processor to implement each process of the embodiment of the foregoing power control parameter determining method, and the same technical effects can be achieved. To avoid repetition, details are not described herein again.

It should be noted that in this specification, the terms "comprise", "include", and any other variants thereof are intended to cover non-exclusive inclusion, so that a process, a method, an article, or an apparatus that includes a series of elements not only includes these very elements, but also includes other elements not expressly listed, or also includes elements inherent to this process, method, article, or apparatus. Without more limitations, elements defined by the sentence "including one" does not exclude that there are still other same elements in the processes, methods, objects, or apparatuses. In addition, it should be pointed out that the scope of the methods and devices in the embodiments of the present application is not limited to performing functions in the order shown or discussed, and may also include performing functions in a substantially simultaneous manner or in a reverse order according to the functions involved, for example, the described methods may be performed in an order different from that described, and various steps may also be added, omitted, or combined. In addition, features described with reference to some examples may be combined in other examples.

According to the descriptions in the foregoing implementations, a person skilled in the art may clearly learn that the method according to the foregoing embodiment may be implemented by relying on software and a commodity hardware platform or by using hardware. Based on such an understanding, the technical solutions of the present application essentially, or the part contributing to the prior art may be implemented in a form of a computer software product. The computer software product is stored in a storage medium (for example, a ROM/RAM, a magnetic disk, or a compact disc), and includes a plurality of instructions for instructing a terminal (which may be a mobile phone, a computer, a server, an air conditioner, a network device, or the like) to perform the method described in the embodiments of the present application.

The embodiments of the present application are described above with reference to the accompanying drawings, but the present application is not limited to the above specific implementations, and the above specific implementations are only illustrative and not restrictive. Under the enlightenment of the present application, those of ordinary skill in the art can make many forms without departing from the purpose of the present application and the protection scope of the claims, all of which fall within the protection of the present application.

**Claims**

1.  A power control parameter determining method, comprising:

    in a case that a serving cell of a terminal is configured with multi-physical downlink shared channel PDSCH scheduling, determining, by the terminal, a first power control parameter according to target information related to the multi-PDSCH scheduling, wherein the first power control parameter comprises a number of valid bits in a hybrid automatic repeat request acknowledgement HARQ-ACK;
    determining, by the terminal according to the first power control parameter, a transmit power of a physical uplink control channel PUCCH that carries the HARQ-ACK; and
    transmitting, by the terminal, the PUCCH to a network side device according to the transmit power.

2.  The method according to claim 1, wherein the target information comprises at least one of the following: first configuration information for time domain bundling transmission, second configuration information for spatial bundling transmission, a codebook used by the HARQ-ACK, and a sub-codebook used by the HARQ-ACK.

3.  The method according to claim 2, wherein in a case that the codebook used by the HARQ-ACK is a type-1 codebook, the determining, by the terminal, a first power control parameter according to target information related to the multi-PDSCH scheduling comprises:

    determining, by the terminal, at least one of a first variable and a second variable based on the target information; and
    determining, by the terminal, the first power control parameter according to at least one of the first variable and the second variable, and based on a first calculation rule corresponding to the type-1 codebook.

4.  The method according to claim 3, wherein in a case that it is configured that the HARQ-ACK is to be transmitted by using time domain bundling and not using spatial bundling, if the terminal receives PDSCH(s) within a first occasion, the determining, by the terminal, a first variable according to the target information comprises:

    determining, by the terminal, that the first variable is equal to a number of TBs corresponding to target scheduled row(s);
    wherein the target scheduled row(s) comprises scheduled row(s) mapped to the first occasion, or the target scheduled row(s) comprises scheduled row(s) determined according to a first PDSCH mapped to the first occasion and based on an association with the last time domain resource allocation record, and the scheduled row(s) comprises: row(s) actually scheduled or configured for the terminal from a time domain resource allocation TDRA table.

5.  The method according to claim 4, wherein the number of target scheduled rows is M, and in a case that M=0, the number of TBs corresponding to the target scheduled row(s) is 0; or
    in a case that M>0, the number of TBs corresponding to the target scheduled row(s) is any one of the following:

    a sum of numbers of TBs enabled for all the M target scheduled row(s);
    a number of TBs enabled for the M target scheduled row(s);
    a sum of numbers of TBs configured for all the M target scheduled row(s); and
    a number of TBs configured for the M target scheduled row(s).

6.  The method according to claim 5, wherein

    in a case that the serving cell is not configured to allow dual codeword transmission, the number of TBs enabled for each of the target scheduled row(s) is equal to 1; or
    in a case that the serving cell is configured to allow dual codeword transmission, the number of TBs enabled for a target scheduled row of the target scheduled row(s) is equal to any one of the following:

    in a case that a first TB disabling mode is used, a number of TBs that are uniformly enabled by a piece of downlink control information DCI corresponding to the target scheduled row; and
    in a case that a second TB disabling mode is used, a number of TBs that are actually enabled by a piece of DCI corresponding to the target scheduled row.

7. The method according to claim 5, wherein the number of TBs enabled for the M target scheduled row(s) comprises:

   a maximum value of numbers of TBs enabled for the M target scheduled row(s); and
   a number of enabled TBs determined according to the M target scheduled row(s).

8. The method according to claim 5, wherein

   in a case that the serving cell is not configured to allow dual codeword transmission, the number of TBs configured for each of the target scheduled row(s) is equal to 1; or
   in a case that the serving cell is configured to allow dual codeword transmission, the number of TBs configured for each of the target scheduled row(s) is equal to 2.

9. The method according to any one of claims 4 to 8, wherein in a case that a PDSCH corresponding to the last time domain resource allocation record of any scheduled row is required to be a valid PDSCH, the determining, by the terminal, that the first variable is equal to the number of TBs corresponding to the target scheduled row(s) comprises:

   if the first PDSCH exists and the first PDSCH is associated with or corresponds to the last time domain resource allocation record of any of the target scheduled row(s), determining, by the terminal, that the target number of TBs is equal to a number of TBs enabled or configured for the first PDSCH; and
   if the first PDSCH does not exist or the first PDSCH is not associated with or does not correspond to the last time domain resource allocation record of any of the target scheduled row(s), determining, by the terminal, that the first variable is 0.

10. The method according to claim 3, wherein in a case that the codebook used by the HARQ-ACK is a type-1 codebook, and it is configured that the type-1 codebook is to be transmitted by using time domain bundling and using spatial bundling, if the terminal receives PDSCH(s) within a first occasion, the determining, by the terminal, a first variable according to the target information comprises:

    determining, by the terminal, that the first variable is equal to a number of target scheduled row(s);
    wherein the target scheduled row(s) comprises scheduled row(s) mapped to the first occasion, or the target scheduled row(s) comprises scheduled row(s) determined according to a first PDSCH mapped to the first occasion and based on an association with the last time domain resource allocation record, and the scheduled row(s) comprises: row(s) actually scheduled or configured for the terminal from a TDRA table.

11. The method according to claim 10, wherein in a case that a PDSCH corresponding to the last time domain resource allocation record of any scheduled row is required to be a valid PDSCH, the determining, by the terminal, that the first variable is equal to the number of the target scheduled row(s) comprises any one of the following:

    if the first PDSCH exists and the first PDSCH is associated with or corresponds to the last time domain resource allocation record of any of the target scheduled row(s), determining, by the terminal, that the number of the target scheduled row(s) is 1; and
    if the first PDSCH does not exist or the first PDSCH is not associated with or does not correspond to the last time domain resource allocation record of any of the target scheduled row(s), determining, by the terminal, that the number of the target scheduled row(s) is 0.

12. The method according to claim 3, wherein in a case that the codebook used by the HARQ-ACK is a type-1 codebook, the determining, by the terminal, a second variable according to the target information comprises:
    determining, by the terminal, that the second variable is equal to 0.

13. The method according to claim 2, wherein in a case that the codebook used by the HARQ-ACK is a type-2 codebook, the determining, by the terminal, a first power control parameter according to target information related to the multi-PDSCH scheduling comprises:

    in a case that no cell in the PUCCH cell group is configured with time domain bundling, determining, by the terminal, the first power control parameter according to a first sub-codebook and a second sub-codebook, wherein the PUCCH cell group comprises serving cell(s) of the terminal, the first sub-codebook corresponds to a granularity of single HARQ-ACK unit, and the second sub-codebook corresponds to a granularity of multiple HARQ-ACK units;

in a case that cells configured with multi-PDSCH scheduling in the PUCCH cell group are all configured with time domain bundling, and a number of configured bundling groups is equal to 1, determining, by the terminal, the first power control parameter according to the first sub-codebook; and

in a case that at least one of cells configured with multi-PDSCH scheduling in the PUCCH cell group is configured with time domain bundling, and a number of configured bundling groups is great than 1, determining, by the terminal, the first power control parameter according to the first sub-codebook and the second sub-codebook.

14. The method according to claim 13, wherein the determining, by the terminal, the first power control parameter according to the first sub-codebook and the second sub-codebook comprises:

determining, by the terminal, a first parameter according to a second calculation rule corresponding to the first sub-codebook, and determining a second parameter according to a third calculation rule corresponding to the second sub-codebook; and

determining, by the terminal, that the first power control parameter is equal to a sum of the first parameter and the second parameter.

15. The method according to claim 13, wherein the determining, by the terminal, the first power control parameter according to the first sub-codebook comprises:

determining, by the terminal, a third variable according to the target information; and

determining, by the terminal, the first power control parameter based on the second calculation rule and the third variable.

16. The method according to claim 14, wherein

the determining, by the terminal, a first parameter according to a second calculation rule corresponding to the first sub-codebook comprises:

determining, by the terminal, a third variable according to the target information; and

determining, by the terminal, the first parameter based on the second calculation rule and the third variable; and/or

the determining, by the terminal, a second parameter according to a third calculation rule corresponding to the second sub-codebook comprises:

determining, by the terminal, a fourth variable according to the target information; and

determining, by the terminal, the second parameter based on the third calculation rule and the fourth variable.

17. The method according to claim 15 or 16, wherein in a case that the terminal detects, in a second occasion, DCI that schedules PDSCH(s) and the terminal is not configured to apply spatial bundling, the determining, by the terminal, a third variable based on the target information comprises:

determining, by the terminal, that the third variable is equal to a number of TBs actually enabled by or configured for the DCI that schedules the PDSCH(s) detected by the terminal in the second occasion.

18. The method according to claim 17, wherein

in a case that the serving cell is not configured to allow dual codeword transmission, the number of TBs actually enabled by or configured for each piece of DCI that schedules PDSCH(s) is equal to 1; or

in a case that the serving cell is configured to allow dual codeword transmission, the number of TBs configured for each piece of DCI that schedules PDSCH(s) is equal to 2, or the number of TBs actually enabled by each piece of DCI that schedules PDSCH(s) is any one of the following:

in a case that the first TB disabling mode is used, a number of TBs that are uniformly enabled by each piece of DCI that schedules PDSCH(s); and

in a case that the second TB disabling mode is used, a number of TBs that are actually enabled by each piece of DCI that schedules PDSCH(s).

19. The method according to claim 15 or 16, wherein the determining, by the terminal, a third variable according to the target information comprises:

in a case that the terminal is allowed to detect, for a single serving cell in the second occasion, only a single piece of DCI that schedules PDSCH(s), determining, by the terminal, that the third variable is equal to a number of TBs that are actually enabled by or configured for the single piece of DCI that schedules PDSCH(s) and that is detected by the terminal; or

in a case that the terminal is allowed to detect, for a single serving cell in the second occasion, at least two pieces of DCI that schedules PDSCH(s), determining, by the terminal, that the third variable is equal to a sum of numbers of TBs that are actually enabled by or configured for all pieces of DCI that schedule PDSCH(s) and are detected by the terminal.

20. The method according to claim 15 or 16, wherein in a case that the terminal detects, in a second occasion, DCI that schedules PDSCH(s) and is configured to apply spatial bundling, the determining, by the terminal, a third variable based on the target information comprises:
determining, by the terminal, that the third variable is equal to a number of pieces of DCI that schedule PDSCH(s) and are detected by the terminal in the second occasion.

21. The method according to claim 14, wherein the determining, by the terminal, a second parameter according to a third calculation rule corresponding to the second sub-codebook comprises:

in a case that the second sub-codebook does not comprise a target HARQ-ACK and the target HARQ-ACK comprises a HARQ-ACK obtained by performing time domain bundling on a first HARQ-ACK, determining, by the terminal, the second parameter according to the following formula:

$$n_{\text{HARQ-ACK,second}} = \left(\left(V_{\text{DAI},m_{\text{last}}}^{\text{DL}} - \sum_{c=0}^{N_{\text{cells}}^{\text{DL,multi}}-1} U_{\text{DAI},c}^{\text{multi}}\right) \text{mod}(T_D)\right) N_{\text{HARQ-ACK}}^{\max} + \sum_{c=0}^{N_{\text{cells}}^{\text{DL,multi}}-1} \sum_{m=0}^{M-1} N_{m,c}^{\text{received,multi}}$$

wherein the first HARQ-ACK comprises HARQ-ACK(s) corresponding to piece(s) of DCI each of which is used to schedule at least two PDSCHs, and $n_{\text{HARQ-ACK,second}}$ indicates the second parameter determined according to the third calculation rule corresponding to the second sub-codebook;

$T_D = 2^{N_{\text{C-DAI}}^{\text{DL}}}$, and $N_{\text{C-DAI}}^{\text{DL}}$ indicates a number of bits occupied by a counter downlink assignment index DAI;

$N_{\text{cells}}^{\text{DL,multi}}$ indicates a number of serving cells configured with multi-PDSCH scheduling in the PUCCH cell group;

when $N_{\text{cells}}^{\text{DL,multi}} = 1$, $V_{\text{DAI},m_{\text{last}}}^{\text{DL}}$ indicates a value of a counter DAI carried by the last piece of type-1 DCI for any serving cell that the terminal detects in M PDCCH monitoring occasions, and the type-1 DCI comprises DCI each piece of which is used to schedule more than one PDSCH;

when $N_{\text{cells}}^{\text{DL,multi}} > 1$, $V_{\text{DAI},m_{\text{last}}}^{\text{DL}}$ indicates a value of a total DAI carried by the last piece of type-1 DCI for any serving cell that the terminal detects in the M PDCCH monitoring occasions;

when the terminal detects no type-1 DCI in the M PDCCH monitoring occasions for any serving cell, $V_{\text{DAI},m_{\text{last}}}^{\text{DL}} = 0$;

$U_{\text{DAI},c}^{\text{multi}}$ indicates a total number of pieces of type-1 DCI detected by the terminal in the M PDCCH monitoring occasions for a serving cell c;

$N_{\text{HARQ-ACK}}^{\max}$ indicates a maximum value of $N_{\text{TB},c}^{\text{DL}} \cdot N_{\text{PDSCH},c}^{\max}$ obtained by traversing $N_{\text{cells}}^{\text{DL}}$ serving cells;

$N_{\text{PDSCH},c}^{\max}$ is a maximum number of PDSCH receptions that can be scheduled by a single piece of type-1 DCI for the serving cell c;

when application of spatial bundling is not configured, $N_{\text{TB},c}^{\text{DL}}$ is a maximum number of codewords that can be scheduled by DCI and is configured for the serving cell c; and when application of spatial bundling is configured, $N_{\text{TB},c}^{\text{DL}} = 1$;

if spatial bundling is not configured, $N_{m,c}^{\text{received,multi}}$ is a total number of transport blocks actually scheduled by all pieces of type-1 DCI detected by the UE in the PDCCH detection occasion m for the serving cell c; and if spatial bundling is configured, $N_{m,c}^{\text{received,multi}}$ is a total number of valid PDSCHs scheduled by all pieces of type-1 DCI detected by the UE in the PDCCH detection occasion m for the serving cell c;
and/or

in a case that the second sub-codebook comprises the target HARQ-ACK, determining, by the terminal, the second parameter according to the following formula:

$$n_{HARQ\text{-}ACK,second} = \left( \left( V_{DAI,m_{last}}^{DL} - \sum_{c=0}^{N_{cells}^{DL,multi}-1} U_{DAI,c}^{multi} \right) mod(T_D) \right) N_{HARQ-ACK,max}^{TBG,max} + \sum_{c=0}^{N_{cells}^{DL,multi}-1} \sum_{m=0}^{M-1} N_{m,c}^{received,multi}$$

wherein $N_{cells}^{DL,multi}$ indicates a number of multi-feedback cells in the PUCCH cell group, and a multi-feedback cell is a type-1 cell or a type-2 cell, wherein the type-1 cell is a serving cell configured with multi-PDSCH scheduling and not configured with time domain bundling, and the type-2 cell is a serving cell configured with multi-PDSCH scheduling and configured with time domain bundling and a number of configured bundling groups is greater than 1;

$N_{cells}^{DL,TBG}$ is equal to $N_{cells}^{DL,multi}$ ;

for a first cell c, a corresponding first maximum value is calculated based on $N_{TB,c}^{DL} \cdot N_{PDSCH,c}^{max}$ , and $N_{PDSCH,c}^{max}$ is a maximum number of PDSCH receptions that can be scheduled by a single piece of type-1 DCI corresponding to the first cell c; and the first cell is any one multi-feedback cell that is a type-1 cell, from the $N_{cells}^{DL,TBG}$ multi-feedback cells;

for a second cell c, a corresponding first maximum value is calculated based on $N_{TB,c}^{DL} \cdot N_{HARQ-ACK,c}^{TBG,max}$ , and $N_{HARQ-ACK,c}^{TBG,max}$ is a number of bundling groups configured for the second cell c; and the second cell is any one multi-feedback cell that is a type-2 cell, from the $N_{cells}^{DL,TBG}$ multi-feedback cells; and

$N_{HARQ-ACK,max}^{TBG,max}$ is a maximum value of first maximum values that are obtained by traversing the $N_{cells}^{DL,TBG}$ multi-feedback cells.

22. A power control parameter determining apparatus, applicable to a terminal, comprising:

a first determining module, configured to: in a case that a serving cell of a terminal is configured with multi-physical downlink shared channel PDSCH scheduling, determine a first power control parameter according to target information related to the multi-PDSCH scheduling, wherein the first power control parameter comprises a number of valid bits in a hybrid automatic repeat request acknowledgement HARQ-ACK;
a second determining module, configured to determine, according to the first power control parameter, a transmit power of a physical uplink control channel PUCCH that carries the HARQ-ACK; and
a transmitting module, configured to transmit the PUCCH to a network side device according to the transmit power.

23. The apparatus according to claim 22, wherein the target information comprises at least one of the following: first configuration information for time domain bundling transmission, second configuration information for spatial bundling transmission, a codebook used by the HARQ-ACK, and a sub-codebook used by the HARQ-ACK.

24. The apparatus according to claim 23, wherein in a case that the codebook used by the HARQ-ACK is a type-1 codebook, the first determining module comprises:

a first determining unit, configured to determine at least one of a first variable and a second variable based on the target information; and
a second determining unit, configured to determine the first power control parameter according to at least one of the first variable and the second variable, and based on a first calculation rule corresponding to the type-1 codebook.

25. The apparatus according to claim 24, wherein in a case that it is configured that the HARQ-ACK is to be transmitted by using time domain bundling and not using spatial bundling, if the terminal receives PDSCH(s) within a first occasion, the first determining unit is specifically configured to:

determine that the first variable is equal to a number of TBs corresponding to target scheduled row(s), wherein the target scheduled row(s) comprises scheduled row(s) mapped to the first occasion, or the target scheduled row(s) comprises scheduled row(s) determined according to a first PDSCH mapped to the first occasion based on an association with the last time domain resource allocation record, and the scheduled row(s) comprises: row(s) actually scheduled or configured for the terminal from a time domain resource allocation TDRA table.

26. The apparatus according to claim 25, wherein the number of target scheduled rows is M, and in a case that M=0, the number of TBs corresponding to the target scheduled row is 0; or
in a case that M>0, the number of TBs corresponding to the target scheduled row is any one of the following:

a sum of numbers of TBs enabled for all the M target scheduled rows;
a number of TBs enabled for the M target scheduled rows;
a sum of numbers of TBs configured for all the M target scheduled rows; and
a number of TBs configured for the M target scheduled rows.

27. The apparatus according to claim 26, wherein

in a case that the serving cell is not configured to allow dual codeword transmission, the number of TBs enabled for each of the target scheduled row(s) is equal to 1; or
in a case that the serving cell is configured to allow dual codeword transmission, the number of TBs enabled for the target scheduled row is equal to any one of the following:

in a case that a first TB disabling mode is used, a number of TBs that are uniformly enabled by a piece of downlink control information DCI corresponding to the target scheduled row; and
in a case that a second TB disabling mode is used, a number of TBs that are actually enabled by a piece of DCI corresponding to the target scheduled row.

28. The apparatus according to claim 26, wherein the number of TBs enabled for the M target scheduled row(s) comprises:

a maximum value of numbers of TBs enabled for the M target scheduled row(s); and
a number of enabled TBs determined according to the M target scheduled row(s).

29. The apparatus according to claim 26, wherein

in a case that the serving cell is not configured to allow dual codeword transmission, the number of TBs configured for each of the target scheduled row(s) is equal to 1; or
in a case that the serving cell is configured to allow dual codeword transmission, the number of TBs configured for each of the target scheduled row(s) is equal to 2.

30. The apparatus according to any one of claims 25 to 29, wherein in a case that a PDSCH corresponding to the last time domain resource allocation record of any scheduled row is required to be a valid PDSCH, the first determining unit comprises:

a first determining subunit, configured to: if the first PDSCH exists and the first PDSCH is associated with or corresponds to the last time domain resource allocation record of the target scheduled row, determine that the target number of TBs is equal to a number of TBs enabled or configured for the first PDSCH; and
a second determining subunit, configured to: if the first PDSCH does not exist or the first PDSCH is not associated with or does not correspond to the last time domain resource allocation record of any target scheduled row, determine that the first variable is 0.

31. The apparatus according to claim 24, wherein in a case that the codebook used by the HARQ-ACK is a type-1 codebook, and it is configured that the type-1 codebook is to be transmitted by using time domain bundling and by using spatial bundling, if the terminal receives PDSCH(s) within a first occasion, the first determining unit is specifically configured to:

determine that the first variable is equal to a number of target scheduled row(s);

wherein the target scheduled row(s) comprises scheduled row(s) mapped to the first occasion, or the target scheduled row(s) comprises scheduled row(s) determined according to a first PDSCH mapped to the first occasion based on an association with the last time domain resource allocation record, and the scheduled row(s) comprises: row(s) actually scheduled or configured for the terminal from a TDRA table.

32. The apparatus according to claim 31, wherein in a case that a PDSCH corresponding to the last time domain resource allocation record of any scheduled row is required to be a valid PDSCH, the first determining unit is specifically configured to perform any one of the following:

if the first PDSCH exists and the first PDSCH is associated with or corresponds to the last time domain resource allocation record of any of the target scheduled row(s), determine that the number of the target scheduled row(s) is 1; and

if the first PDSCH does not exist or the first PDSCH is not associated with or does not correspond to the last time domain resource allocation record of any of the target scheduled row(s), determine that the number of the target scheduled row(s) is 0.

33. The apparatus according to claim 24, wherein in a case that the codebook used by the HARQ-ACK is a type-1 codebook, the first determining unit is further configured to:
determine that the second variable is equal to 0.

34. The apparatus according to claim 23, wherein in a case that the codebook used by the HARQ-ACK is a type-2 codebook, the first determining module comprises:

a third determining unit, configured to: in a case that no cell in the PUCCH cell group is configured with time domain bundling, determine the first power control parameter according to a first sub-codebook and a second sub-codebook, wherein the PUCCH cell group comprises serving cell(s) of the terminal, the first sub-codebook corresponds to a granularity of single HARQ-ACK unit, and the second sub-codebook corresponds to a granularity of multiple HARQ-ACK units;

a fourth determining unit, configured to: in a case that cells configured with multi-PDSCH scheduling in the PUCCH cell group are all configured with time domain bundling, and a number of configured bundling groups is equal to 1, determine the first power control parameter according to the first sub-codebook; and

a fifth determining unit, configured to: in a case that at least one of cells configured with multi-PDSCH scheduling in the PUCCH cell group is configured with time domain bundling, and a number of configured bundling groups is great than 1, determine the first power control parameter according to the first sub-codebook and the second sub-codebook.

35. The apparatus according to claim 34, wherein the third determining unit and/or the fifth determining unit comprises:

a third determining subunit, configured to determine a first parameter according to a second calculation rule corresponding to the first sub-codebook, and determine a second parameter according to a third calculation rule corresponding to the second sub-codebook; and

a fourth determining subunit, configured to determine that the first power control parameter is equal to a sum of the first parameter and the second parameter.

36. The apparatus according to claim 34, wherein the fourth determining unit comprises:

a fifth determining subunit, configured to determine the third variable according to the target information; and

a sixth determining subunit, configured to determine the first power control parameter based on the second calculation rule and the third variable.

37. The apparatus according to claim 35, wherein
the third determining subunit comprises:

a first determining secondary unit, configured to determine the third variable according to the target information; and

a second determining secondary unit, configured to determine the first parameter based on the second calculation rule and the third variable;

and/or
the third determining subunit further comprises:

a third determining secondary unit, configured to determine the fourth variable according to the target information; and
a fourth determining secondary unit, configured to determine the second parameter based on the third calculation rule and the fourth variable.

38. The apparatus according to claim 36 or 37, wherein in a case that the terminal detects, in a second occasion, DCI that schedules PDSCH(s) and is not configured with application of spatial bundling, the fifth determining subunit and/or the first determining secondary unit is specifically configured to:
determine that the third variable is equal to a number of TBs actually enabled or configured by the DCI that schedules PDSCH(s) detected by the terminal in the second occasion.

39. The apparatus according to claim 38, wherein

in a case that the serving cell is not configured to allow dual codeword transmission, the number of TBs actually enabled by or configured for each piece of DCI that schedules PDSCH(s) is equal to 1; or
in a case that the serving cell is configured to allow dual codeword transmission, the number of TBs configured for each piece of DCI that schedules PDSCH(s) is equal to 2, or the number of TBs actually enabled by each piece of DCI that schedules PDSCH(s) is any one of the following:

in a case that the first TB disabling mode is used, a number of TBs that are uniformly enabled by each piece of DCI that schedules PDSCH(s); and
in a case that the second TB disabling mode is used, a number of TBs that are actually enabled by each piece of DCI that schedules PDSCH(s).

40. The apparatus according to claim 36 or 37, wherein the fifth determining subunit and/or the first determining secondary unit is specifically configured to:

in a case that the terminal is allowed to detect, for a single serving cell in the second occasion, only a single piece of DCI that schedules PDSCH(s), determine that the third variable is equal to a number of TBs that are actually enabled or configured by the single piece of DCI that schedules PDSCH(s) and that is detected by the terminal; or
in a case that the terminal is allowed to detect, for a single serving cell in the second occasion, at least two pieces of DCI that schedules PDSCH(s), determine that the third variable is equal to a sum of numbers of TBs that are actually enabled or configured by all pieces of DCI that schedule the PDSCH and are detected by the terminal.

41. The apparatus according to claim 36 or 37, wherein in a case that the terminal detects, in a second occasion, DCI that schedules PDSCH(s) and is configured to apply spatial bundling, the fifth determining subunit and/or the first determining secondary unit is specifically configured to:
determine that the third variable is equal to a number of pieces of DCI that schedule the PDSCH and are detected by the terminal in the second occasion.

42. The apparatus according to claim 35, wherein the third determining subunit is specifically configured to:

in a case that the second sub-codebook does not comprise a target HARQ-ACK and the target HARQ-ACK comprises a HARQ-ACK obtained by performing time domain bundling on the first HARQ-ACK, determine, by the terminal, the second parameter according to the following formula:

$$n_{\text{HARQ-ACK,second}} = \left( \left( V_{\text{DAI},m_{\text{last}}}^{\text{DL}} - \sum_{c=0}^{N_{\text{cells}}^{\text{DL,multi}}-1} U_{\text{DAI},c}^{\text{multi}} \right) \bmod(T_{\text{D}}) \right) N_{\text{HARQ-ACK}}^{\max} + \sum_{c=0}^{N_{\text{cells}}^{\text{DL,multi}}-1} \sum_{m=0}^{M-1} N_{m,c}^{\text{received,multi}}$$

wherein the first HARQ-ACK is a HARQ-ACK corresponding to piece(s) of DCI each of which is used to schedule at least two PDSCHs, and $n_{HARQ\text{-}ACK,second}$ indicates the second parameter determined according to the third calculation rule corresponding to the second sub-codebook;

$T_D = 2^{N_{C\text{-}DAI}^{DL}}$ , and $N_{C\text{-}DAI}^{DL}$ indicates a number of bits occupied by a counter downlink assignment index DAI;

$N_{cells}^{DL,multi}$ indicates a number of serving cells configured with multi-PDSCH scheduling in the PUCCH cell group;

when $N_{cells}^{DL,multi} = 1$, $V_{DAI,m_{last}}^{DL}$ indicates a value of a counter DAI carried by the last piece of type-1 DCI for any serving cell that the terminal detects in M PDCCH monitoring occasions, and the type-1 DCI comprises DCI used to schedule more than one PDSCH;

when $N_{cells}^{DL,multi} > 1$, $V_{DAI,m_{last}}^{DL}$ indicates a value of a total DAI carried by the last piece of type-1 DCI for any serving cell that the terminal detects in M PDCCH monitoring occasions;

when the terminal detects no type-1 DCI in the M PDCCH monitoring occasions for any serving cell, $V_{DAI,m_{last}}^{DL} = 0$;

$U_{DAI,c}^{multi}$ indicates a total number of pieces of type-1 DCI detected by the terminal in M PDCCH monitoring occasions for a serving cell c;

$N_{HARQ\text{-}ACK}^{max}$ indicates a maximum value of $N_{TB,c}^{DL} \cdot N_{PDSCH,c}^{max}$ obtained by traversing $N_{cells}^{DL}$ serving cells;

$N_{PDSCH,c}^{max}$ is a maximum number of PDSCH receptions that can be scheduled by a single piece of type-1 DCI for the serving cell c;

when application of spatial bundling is not configured, $N_{TB,c}^{DL}$ is a maximum number of codewords that can be scheduled by DCI and are configured for the serving cell c; and when application of spatial bundling is configured, $N_{TB,c}^{DL} = 1$;

if spatial bundling is not configured, $N_{m,c}^{received,multi}$ is a total number of transport blocks actually scheduled by all pieces of type-1 DCI detected by the UE in the PDCCH detection occasion m for the serving cell c; and if spatial bundling is configured, $N_{m,c}^{received,multi}$ is a total number of valid PDSCHs scheduled by all pieces of type-1 DCI detected by the UE in the PDCCH detection occasion m for the serving cell c;

and/or

in a case that the second sub-codebook comprises the target HARQ-ACK, determining, by the terminal, the second parameter according to the following formula:

$$n_{HARQ\text{-}ACK,second} = \left(\left(\left(V_{DAI,m_{last}}^{DL} - \sum_{c=0}^{N_{cells}^{DL,multi}-1} U_{DAI,c}^{multi}\right) \bmod(T_D)\right) N_{HARQ\text{-}ACK,max}^{TBG,max} + \sum_{c=0}^{N_{cells}^{DL,multi}-1} \sum_{m=0}^{M-1} N_{m,c}^{received,multi}\right)$$

wherein $N_{cells}^{DL,multi}$ indicates a number of multi-feedback cells in the PUCCH cell group, a multi-feedback cell is a type-1 cell or a type-2 cell, the type-1 cell is a serving cell configured with multi-PDSCH scheduling and not configured with time domain bundling, and the type-2 cell is a serving cell configured with multi-PDSCH scheduling and configured with time domain bundling and a number of configured bundling groups is greater than 1; $N_{cells}^{DL,TBG}$ is equal to $N_{cells}^{DL,multi}$;

for a first cell c, a corresponding first maximum value is calculated based on $N_{TB,c}^{DL} \cdot N_{PDSCH,c}^{max}$, and $N_{PDSCH,c}^{max}$ is a maximum number of PDSCH receptions that can be scheduled by a single piece of type-1 DCI corresponding to the first cell c; the first cell is any one multi-feedback cell that is the type-1 cell, from the $N_{cells}^{DL,TBG}$ multi-feedback cells;

for a second cell c, a corresponding first maximum value is calculated based on $N_{TB,c}^{DL} \cdot N_{HARQ\text{-}ACK,c}^{TBG,max}$, and $N_{HARQ\text{-}ACK,c}^{TBG,max}$ is a number of bundling groups configured for the second cell c; the second cell is any one multi-feedback cell that is the type-2 cell, from the $N_{cells}^{DL,TBG}$ multi-feedback cells; and

$N_{HARQ\text{-}ACK,max}^{TBG,max}$ is a maximum value of first maximum values that are obtained by traversing the $N_{cells}^{DL,TBG}$ multi-feedback cells and that correspond to the multi-feedback cells.

**43.** A terminal, comprising a processor and a memory, wherein the memory stores a program or an instruction executable on the processor, and the program or the instruction implement the steps of the power control parameter determining method according to any one of claims 1 to 21 when being executed by the processor.

**44.** A readable storage medium, storing a program or an instruction, wherein the program or the instruction implement the steps of the power control parameter determining method according to any one of claims 1 to 21 when being executed by a processor.

Network side
device

11

11

Terminal

Terminal

## FIG. 1

In a case that a serving cell of a terminal is configured with multi- PDSCH scheduling, the terminal determines a first power control parameter according to target information related to the multi-PDSCH scheduling, where the first power control parameter includes a number of valid bits in a HARQ-ACK — 201

The terminal determines, according to the first power control parameter, a transmit power of a PUCCH that carries the HARQ-ACK — 202

The terminal transmit the PUCCH to a network side device according to the transmit power — 203

## FIG. 2

300

Power control parameter determining apparatus

301

First determining module

302

Second determining module

303

Sending module

FIG. 3

400

Communication device

401 Processor ⟺ Memory 402

FIG. 4

FIG. 5

## INTERNATIONAL SEARCH REPORT

| | International application No. |
|---|---|
| | **PCT/CN2022/144041** |

**A. CLASSIFICATION OF SUBJECT MATTER**

H04W72/04(2023.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

WPI; EPODOC; CNPAT; CNKI; 3GPP: PDSCH, 物理下行共享信道, 时间绑定, 空间绑定, HARQ, ACK, PUCCH, 功率, 码本, 比特, time domain bundling, spatial bundling, power, codebook, bit

**C. DOCUMENTS CONSIDERED TO BE RELEVANT**

| Category* | Citation of document, with indication, where appropriate, of the relevant passages | Relevant to claim No. |
|---|---|---|
| X | CN 102480775 A (DATANG MOBILE COMMUNICATIONS EQUIPMENT CO., LTD.) 30 May 2012 (2012-05-30) description, paragraphs 42-79, and figure 3 | 1-44 |
| X | CN 102740433 A (ZTE CORP.) 17 October 2012 (2012-10-17) description, paragraphs 60-92, and figure 3 | 1-44 |
| A | CN 103580823 A (ALCATEL-LUCENT SHANGHAI BELL CO., LTD.) 12 February 2014 (2014-02-12) entire document | 1-44 |
| A | CN 108289015 A (BEIJING SAMSUNG COMMUNICATION TECHNOLOGY RESEARCH CO., LTD. et al.) 17 July 2018 (2018-07-17) entire document | 1-44 |
| A | WO 2018128474 A1 (SAMSUNG ELECTRONICS CO., LTD.) 12 July 2018 (2018-07-12) entire document | 1-44 |
| A | SAMSUNG. "HARQ-ACK codebook determination for eCA" *3GPP TSG RAN WG1 Meeting #82bis,R1-155449*, 09 October 2015 (2015-10-09), entire document | 1-44 |

☐ Further documents are listed in the continuation of Box C.   ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 February 2023** | **20 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2022/144041**

| Patent document cited in search report | | | Publication date (day/month/year) | Patent family member(s) | | | Publication date (day/month/year) |
|---|---|---|---|---|---|---|---|
| CN | 102480775 | A | 30 May 2012 | EP | 2645788 | A1 | 02 October 2013 |
| | | | | KR | 20130121124 | A | 05 November 2013 |
| | | | | JP | 2013543355 | A | 28 November 2013 |
| | | | | US | 2013272157 | A1 | 17 October 2013 |
| | | | | WO | 2012068983 | A1 | 31 May 2012 |
| CN | 102740433 | A | 17 October 2012 | EP | 2685766 | A1 | 15 January 2014 |
| | | | | US | 2014029538 | A1 | 30 January 2014 |
| | | | | BR | 112013025169 | A2 | 14 November 2017 |
| | | | | WO | 2012136081 | A1 | 11 October 2012 |
| | | | | RU | 2013147490 | A | 10 May 2015 |
| | | | | JP | 2014515220 | A | 26 June 2014 |
| CN | 103580823 | A | 12 February 2014 | None | | | |
| CN | 108289015 | A | 17 July 2018 | KR | 20190097296 | A | 20 August 2019 |
| | | | | EP | 3566378 | A1 | 13 November 2019 |
| | | | | US | 2019363840 | A1 | 28 November 2019 |
| | | | | WO | 2018128474 | A1 | 12 July 2018 |
| | | | | IN | 201937030194 | A | 30 August 2019 |
| WO | 2018128474 | A1 | 12 July 2018 | CN | 108289015 | A | 17 July 2018 |
| | | | | KR | 20190097296 | A | 20 August 2019 |
| | | | | US | 2019363840 | A1 | 28 November 2019 |
| | | | | IN | 201937030194 | A | 30 August 2019 |
| | | | | EP | 3566378 | A1 | 13 November 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111673190X